# EUROPEAN PATENT SPECIFICATION

(11) **EP 4 275 089 B1**
(45) Date of publication and mention of the grant of the patent: **27.05.2026**
(21) Application number: 21918093.2
(22) Date of filing: 30.12.2021
(51) Int. Cl.: G02B 27/01, G02B 27/02, G02B 5/18, G02B 27/28, G02B 27/00, G02B 26/08

(54) **ACTUATED PUPIL STEERING FOR HEAD-MOUNTED DISPLAY SYSTEMS**
BETÄTIGTE PUPILLENLENKUNG FÜR KOPFMONTIERTE ANZEIGESYSTEME
ORIENTATION DE PUPILLE ACTIONNÉE POUR SYSTÈMES D'AFFICHAGE MONTÉS SUR LA TÊTE

(30) Priority: 11.01.2021 US 202163136000 P
(43) Date of publication of application: 15.11.2023
(73) Proprietor: Magic Leap, Inc., Plantation, FL 33322 (US)
(72) Inventor: ZIEGLER, David Thomas, 1023 Crissier (CH); TREMBLAY, Eric Julian, 1024 Ecublens, Vaud (CH); ZAGOLLA, Volker, 1018 Lausanne (CH); PAPADOPOULOS, Ioannis, 1005 Lausanne (CH); UFFER, Nicolas Lionel, 1097 Riex (CH); DE GOL, Philippe, 1893 Muraz (CH); ROMERO, Carlos Alberto Macias, 1009 Pully (CH)
(74) Representative: J A Kemp LLP
(86) International application number: PCT/US2021/065719
(87) International publication number: WO 2022/150222

(56) References cited:
- US-A1- 2005 157 409
- US-A1- 2010 046 070
- US-A1- 2016 110 912
- US-A1- 2017 299 870
- US-A1- 2019 361 250
- US-A1- 2020 150 443
- JONGHYUN KIM ET AL: "Foveated AR", ACM TRANSACTIONS ON GRAPHICS, ACM, NY, US, vol. 38, no. 4, 12 July 2019 (2019-07-12), pages 1 - 15, XP058439475, ISSN: 0730-0301, DOI: 10.1145/3306346.3322987

## Description

### BACKGROUND

### Field of the Invention

The present disclosure relates to display systems and, more particularly, to augmented reality display systems.

### Description of the Related Art

Modern computing and display technologies have facilitated the development of systems for so called "virtual reality" or "augmented reality" experiences, wherein digitally reproduced images or portions thereof are presented to a user in a manner wherein they seem to be, or may be perceived as, real. A virtual reality, or "VR", scenario typically involves presentation of digital or virtual image information without transparency to other actual real-world visual input; an augmented reality, or "AR", scenario typically involves presentation of digital or virtual image information as an augmentation to visualization of the actual world around the user. A mixed reality, or "MR", scenario is a type of AR scenario and typically involves virtual objects that are integrated into, and responsive to, the natural world. For example, in an MR scenario, AR image content may be blocked by or otherwise be perceived as interacting with objects in the real world. Jonghyun Kim et al., "Foveated AR", ACM Transactions On Graphics, ACM, NY, US, vol. 38, no. 4, 12 July 2019, describes a near-eye augmented reality display with resolution and focal depth dynamically driven by gaze tracking. The display combines a traveling microdisplay relayed off a concave half-mirror magnifier for the high-resolution foveal region, with a wide field-of-view peripheral display using a projector-based Maxwellian-view display whose nodal point is translated to follow the viewer's pupil during eye movements using a traveling holographic optical element. The same optics relay an image of the eye to an infrared camera used for gaze tracking, which in turn drives the foveal display location and peripheral nodal point.

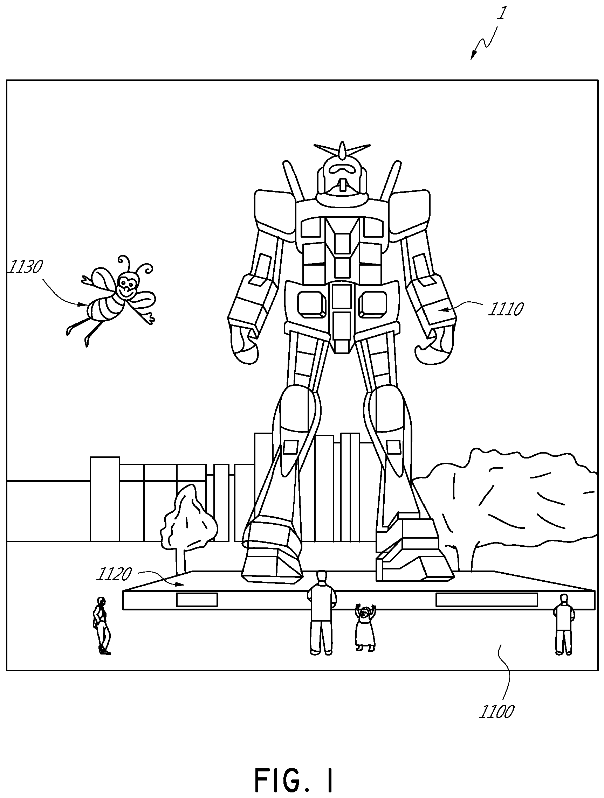

Referring to Figure 1, an augmented reality scene 10 is depicted wherein a user of an AR technology sees a real-world park-like setting 20 featuring people, trees, buildings in the background, and a concrete platform 30. In addition to these items, the user of the AR technology also perceives that he "sees" "virtual content" such as a robot statue 40 standing upon the real-world platform 30, and a cartoon-like avatar character 50 flying by which seems to be a personification of a bumble bee, even though these elements 40, 50 do not exist in the real world. Because the human visual perception system is complex, it is challenging to produce an AR technology that facilitates a comfortable, natural-feeling, rich presentation of virtual image elements amongst other virtual or real-world imagery elements.

Systems, devices, and methods disclosed herein address various challenges related to AR and VR technology.

### SUMMARY

The invention is defined by the appended claims. The invention relates to a head-mounted display system comprising: a frame; an image light projector supported by the frame; a diffractive reflector supported by the frame and disposed forward of the image light projector, the diffractive reflector configured to receive image light projected by the image light projector and to reflect the image light into an eye of a user upon retention of the display system on the user, the diffractive reflector comprising: a plurality of diffractive layers; and an actuator supported by the frame and configured to change relative orientations of the diffractive layers, wherein different relative orientations of the diffractive layers are configured to reflect light to different associated eye positions.

In some embodiments, the actuator is a mechanical actuator configured to change relative physical positions of the diffractive layers. In some embodiments, the actuator is configured to rotate one or more of the diffractive layers. In some embodiments, the diffractive reflector comprises a Risley prism-based stack of diffractive layers. In some embodiments, the actuator is configured to laterally shift one or more of the diffractive layers. In some embodiments, the diffractive layers comprise volume phase holograms. In some embodiments, the diffractive layers comprise reflective geometric phase lenses. In some embodiments, the image light projector has a fixed orientation relative to the diffractive reflector.

In some embodiments, the head-mounted display system further comprises an eye tracking system for determining a position of the pupil of the eye of the user, wherein the actuator is configured to effectuate different orientations corresponding to different pupil locations based upon the determined position of the pupil.

Some aspects include an augmented reality display device comprising: an image light projector; a reflective diffractive combiner configured to receive projected light from the image light projector, the diffractive combiner configured to combine world light with the projected light from the image light projector and to direct the projected light to form an image at variable selectable steered exit pupil locations, the diffractive combiner comprising: a switchable beam steering unit configured to diffract the projected light to form the image at the steered exit pupil locations, the beam steering unit comprising: two or more diffractive gratings configured to receive the projected light; and an actuation mechanism, wherein at least one of the two or more diffractive gratings is coupled to the actuation mechanism, wherein the actuation mechanism is configured to cause a change in orientation of the at least one of the two or more diffraction gratings, wherein different orientations have different associated diffraction angles for incident projected light, wherein the different associated diffraction angles correspond to different steered exit pupil locations.

In some embodiments, the image light projector comprises: one or more micro-electromechanical systems scanning mirrors; and a laser light source. In some embodiments, the image light projector comprises a varifocal lens. In some embodiments, the augmented reality display system further comprises an eye tracking assembly for tracking a position of a pupil of an eye of a user of the display system. In some embodiments, the eye tracking assembly comprises an off-axis camera. In some embodiments, the two or more diffractive gratings form a Risley prism-based steering mechanism, wherein the diffractive combiner comprises further comprises: a collimating holographic optical element rearward of the two or more diffractive gratings; and a holographic optical element focusing lens forward of the two or more diffractive gratings.

In some embodiments, a first diffractive grating of the two or more diffractive gratings and a second diffractive grating of the two or more diffractive gratings are coupled to the actuation mechanism, wherein actuation of the first diffractive grating causes a rotation of the first diffractive grating from a first grating orientation to a second grating orientation, and wherein actuation of the second diffractive grating causes a rotation of the second diffractive grating from a third grating orientation to a fourth grating orientation, wherein rotation of the first diffractive grating changes the diffraction angle of the projected light from the first diffractive grating, and wherein the rotation of the second diffractive grating changes the diffraction angle of the projected light from the second diffractive grating. In some embodiments, the two or more diffractive gratings comprise transmission gratings, wherein the projected light is diffracted only on a single pass through the two or more diffractive gratings of the beam steering unit.

In some embodiments, the two or more diffractive gratings comprise a transmission volume phase holographic grating and a reflection volume phase holographic grating, wherein the transmission volume phase holographic grating is a light collimator, wherein the reflection volume phase holographic grating is configured to focus the projected light to the steered exit pupil. In some embodiments, wherein the reflection volume phase holographic grating is mechanically coupled to the actuation mechanism. In some embodiments, the actuation mechanism is configured to laterally translate the reflection volume phase holographic grating relative to the transmission volume phase holographic grating, wherein lateral translation of the at least one reflection volume phase holographic grating changes the diffraction angle of the projected light upon reflection from the at least one reflection volume phase holographic grating. In some embodiments, a ratio of a movement distance of the steered exit pupil to a distance of the lateral translation of the at least one reflection volume phase holographic grating is 1:1.

In some embodiments, the two or more diffractive gratings comprise at least two quadratic phase diffractive gratings. In some embodiments, the at least two quadratic phase diffractive gratings comprise: a transmission volume phase holographic grating; and a reflection volume phase holographic grating. In some embodiments, the reflection volume phase holographic grating is coupled to the actuation mechanism. In some embodiments, the actuation mechanism is configured to laterally translate the reflection volume phase holographic grating relative to the transmission volume phase holographic grating, wherein the lateral translation causes the quadratic phase diffractive gratings to produce a linear grating function, wherein the linear grating function changes the diffraction angle of the projected light upon reflection from the at least one reflection volume phase holographic grating. In some embodiments, a ratio of a movement distance of the steered exit pupil to a distance of lateral translation of the at least one reflection volume phase holographic grating is greater than 1:1. In some embodiments, the transmission volume phase holographic grating diverges projected light at a predefined focal length. In some embodiments, the actuation mechanism is configured to tilt the reflection volume phase holographic grating towards or away from the at least one transmission volume phase holographic grating, wherein different tilts correspond to different diffraction angles for the projected light upon reflection from the reflection volume phase holographic grating.

In some embodiments, the beam steering unit further comprises: a polarization switch; a quarter wave plate forward of the polarization switch; and a reflector forward of the quarter wave plate. In some embodiments, the beam steering unit further comprises: a first polarization lens rearward of the polarization switch; and a volume phase holographic grating rearward of the first polarization lens. In some embodiments, the two or more diffractive gratings comprise: a second polarization lens forward of the polarization switch; and a third polarization lens forward of the second polarization lens.

In some embodiments, the augmented reality display system further comprises a world compensator configured to counteract a redirection of the world light by the beam steering unit. In some embodiments, the world compensator comprises substantially identical optical components as the beam steering unit, wherein the world compensator is oppositely driven relative to the beam steering unit such that an optical effect of the beam steering unit is cancelled by the world compensator. In some embodiments, the diffractive gratings comprise liquid crystal polarization gratings, wherein the diffractive combiner further comprises: a first holographic optical element configured to focus right circular polarized light; and a second holographic optical element configured to collimate left circular polarized light, wherein the second holographic optical element is a rearward of the beam steering unit, and wherein the first holographic optical element is rearward of the second holographic optical element. In some embodiments, the beam steering unit further comprises a quarter wave plate forward of the diffractive gratings. In some embodiments, the actuation mechanism comprises an electrical switch for selectively applying a voltage to at least one of the one or more liquid crystal polarization gratings. In some embodiments, the applied voltage changes a grating structure of the at least one liquid crystal polarization grating, wherein the change in the grating structure changes the diffraction angle of the projected light upon transmission through the at least one liquid crystal polarization grating. In some embodiments, the liquid crystal polarization gratings comprise Bragg selective liquid crystal polarization gratings. In some embodiments, a number of addressable steering positions of the steered exit pupil is equal to 2n, where n is the number of diffractive gratings within the beam steering unit.

Some aspects include a head-mounted display system comprising: a frame; an image light projector supported by the frame; and a diffractive reflector supported by the frame and disposed forward of the image light projector, the diffractive reflector configured to receive image light projected by the image light projector and to reflect the image light into an eye of a user upon retention of the display system on the user, the diffractive reflector comprising: a plurality of diffractive layers comprising liquid crystal polarization gratings; and a polarization switch is configured to change a polarization of light propagating through the diffractive layers, wherein different states of the switch are configured to reflect light to different associated eye positions.

In some embodiments, the head-mounted display system further comprises a dichroic mirror, wherein the diffractive layers comprise first and second stacks of liquid crystal polarization gratings separated by the dichroic mirror.

In some embodiments, the head-mounted display system further comprises: a dichroic mirror; and a polarizer, wherein the dichroic mirror, polarizer, and liquid crystal polarization gratings form a stack, wherein the polarizer is forward of the dichroic mirror and the dichroic mirror is forward of the liquid crystal polarization gratings. In some embodiments, the head-mounted display system further comprises an eye tracking system for determining a position of the pupil of the eye of the user, wherein the actuator is configured to effectuate different orientations corresponding to different pupil locations based upon the determined position of the pupil.

Some aspects include a method for displaying virtual content from a head-mounted display to a user, the method comprising: tracking a position of a pupil of an eye of the user; projecting image light from an image light projector to a diffractive reflector comprising a plurality of diffractive layers; changing an angle of reflection of the image light off the diffractive reflector to track a position of the pupil. In some embodiments, changing the angle comprises changing relative orientations of the diffractive layers, wherein different relative orientations correspond to different pupil positions, wherein changing the relative orientation directs the light to a tracked position of the pupil. In some embodiments, changing the relative orientation comprises rotating one or more of the diffractive layers relative to one or more others of the diffractive layers. In some embodiments, changing the relative orientation comprises laterally shifting one or more of the diffractive layers relative to one or more others of the diffractive layers. In some embodiments, the diffractive layers comprise liquid crystal polarization gratings and polarization switches, wherein changing the angle of reflection comprises changing a polarization of light propagating through the polarization switches.

### BRIEF DESCRIPTION OF THE DRAWINGS

The drawings are provided to illustrate example embodiments and are not intended to limit the scope of the disclosure.
Figure 1 illustrates a user's view of augmented reality (AR) through an AR device.
Figure 2 illustrates an example of a wearable display system.
Figure 3 illustrates a conventional display system for simulating three-dimensional imagery for a user.
Figure 4 illustrates aspects of an approach for simulating three-dimensional imagery using multiple depth planes.
Figures 5A-5C illustrate relationships between radius of curvature and focal radius.
Figure 6 illustrates an example of an optics architecture for displaying virtual content by steering image light into an eye of a user.
Figure 7 illustrates an example of an optical architecture for an electronically actuated assembly for steering image light into an eye of a user.
Figures 8A and 8B illustrate examples of optical functions of holographic optical elements for the optical architecture of Figure 7.
Figure 9 illustrates an example of an electronically actuated beam steering unit (BSU) for the optical architecture of Figure 7.
Figure 10 illustrates examples of a liquid crystal polarization grating (LCPG) in an Off-State and an On-State.
Figure 11 illustrates examples of diffraction angles θ that may be achieved using a LCPG BSU having n = 3 LCPGs.
Figure 12 illustrates another example of an optical architecture for an electronically actuated assembly for steering image light into an eye of a user.
Figure 13 illustrates another example of an electronically actuated BSU.
Figures 14A and 14B illustrate examples of optical functions of holographic optical elements of the optical architecture of Figure 12.
Figure 15 illustrates examples of diffraction angles θ that may be achieved using a Bragg selective LCPG BSU having n = 3 LCPGs.
Figure 16 illustrates examples of optical architectures having a Risley Prism-based BSU.
Figure 17 illustrates an example of a structure for the Risley prism-based BSU of Figure 16.
Figure 18 illustrates another example of a structure for the Risley prism-based BSU of Figure 16.
Figure 19 illustrates an example of the optical functionality of a single pass Risley prism-based BSU.
Figure 20 illustrates an example of the optical functionality of a double pass Risley prism-based BSU.
Figure 21 illustrates an example of an optical architecture comprising a shifting plate BSU.
Figure 22 illustrates various example pupil steering positions that may be achieved using the shifting plate BSU of Figure 21.
Figure 23 illustrates examples of volume phase holographic grating structures for the shifting plate BSU of Figure 21.
Figure 24 illustrates another example of an optical architecture comprising a shifting plate BSU.
Figure 25 illustrates examples of pupil steering positions that may be achieved using the shifting plate combiner of Figure 24.
Figure 26 illustrates example volume phase holographic grating structures for the shifting plate BSU of Figure 24.
Figures 27A and 27B illustrate examples of pupil steering positions that may be achieved using a tilt and shift shifting plate BSU.
Figure 28 illustrates an example of an optical architecture for a double pass powered shifting plate BSU, showing examples of the propagation of light through the optical structure.
Figure 29 illustrates examples of steered pupil positions for the double pass shifting plate combiner of Figure 29.
Figure 30 illustrates an example of a flowchart for a process for generating an image for a steered exit pupil for a display device.
Figure 31 illustrates an example of a flowchart for other aspects of a processes for generating an image for a steered exit pupil in a display device.
Figure 32 illustrates an example of a diagram of parallel workflow processes for generating an image for a steered exit pupil in a display device.
Figure 33 illustrates an example of a flowchart for a process for displaying an image for a steered exit pupil.
Figure 34 illustrates an example of a flowchart for another process for displaying an image for a steered exit pupil.
Figure 35 illustrates an example of a mechanically actuated BSU.
Figure 36 illustrates an example of a mechanically actuated BSU having linear actuators for moving layers of the BSU on two dimensions.
Figure 37 illustrates another example a mechanically actuated BSU having linear actuators for moving layers of the BSU on two dimensions.
Figure 38 illustrates a diagram of an example of integration of an upstream varifocal lens structure for providing image content on different depth planes.

### DETAILED DESCRIPTION

Some embodiments herein are directed to head-mounted display systems for displaying virtual content by actively steering image light into the eye of a user, or viewer. The display system includes a light projector that outputs light encoded with image information (which may be referred to as image light) to a reflector having actuators that change the relative orientations of structures or the state of optical switches in the reflector. The changes change the angle of reflection of the incident image light, to thereby steer the image light into the eye of the viewer.

In some embodiments, the reflector may be a diffractive reflector having a stack of diffractive layers. In some embodiments, these diffractive layers may form a beam steering unit (BSU) and different relative orientations of the diffractive layers and/or diffractive features in the diffractive layers may provide different angles of reflection of incident light. In some embodiments, the actuation of the reflector may be achieved using a mechanical actuator that changes the relative physical positions of the diffractive layers. For example, the mechanical actuator may be physically coupled to one or more of the diffractive layers. The diffractive layers may be a Risley prism-based stack of diffractive layers, and one or more of these layers may be rotated to provide image light reflection in a desired direction. In some other embodiments, the diffractive layers may be laterally shifted to provide image light reflection in the desired direction.

The actuation of the diffractive layers may also be achieved using an electrical actuator (e.g., one or more electrical switches) that provides current and/or voltage differentials for changing the states have optical switches between liquid crystal gratings of the reflector. For example, the changes in the optical switches may change the polarization of light which may change the direction of propagation of light via the liquid crystal gratings.

The display system may include an eye-tracking system that tracks the position of the pupil of the viewer's eye to determine the direction to which the image light should be steered. The diffractive structures may then be actuated to provide the desired angle of reflection for steering the image light into the viewer's eye. The display systems disclosed herein with pupil steering may be referred to as virtual retina display (VRD) systems. It will be appreciated that the display systems disclosed herein may be augmented reality display systems, which may provide a view of the ambient environment and overlay virtual content on that view, or may be virtual reality display systems, which may simply provide virtual content without providing a view of the ambient environment. In augmented reality display systems, the diffractive reflector may be part of an optical combiner for combining light from the ambient environment with image light, so that the viewer sees both the ambient environment and virtual content provided by the image light.

Advantageously, the VRD systems disclosed herein may provide various benefits. For example, energy efficiency may be increased. It will be appreciated that, in order to provide image light to a viewer as a viewer's eye moves, many conventional displays output image light across a wide area encompassing various possible positions for the viewer's eye. This is undesirably inefficient since, with the viewer's eye in a given position, only a portion of the image light reaches that eye; the light directed to the other possible positions are "wasted" in that they are not received by the eye. By specifically steering image light into the viewer's eye, the image light need not be provided across a large area and VRDs described herein may be 10x or more efficient than conventional technologies. This improved efficiency may be leveraged to provide decreased device size and weight, and may increase luminance, which may improve perceived image quality and facilitate the all-day, everyday use the head-mounted display system.

In some embodiments, the VRD may draw images directly on the retina of the eye. For example, in a raster scan approach, the retina may be divided into a large number of discrete picture elements or pixels arranged in an array. The light beam of the display is swept across the retina (for example, one row at a time from side-to-side and from top-to-bottom of the array). As the beam is swept across the retina, which may be analogized to a projector screen for receiving an image, the beam intensity is varied to create a pattern according to, e.g., a frame or refresh buffer, which holds the corresponding intensity value for each pixel. Where the beam is swept along rows or scan lines, at the end of each row of pixels, the beam returns to the opposite side of the array in a horizontal retrace to begin displaying the next scan line. Similarly, after the beam has displayed an entire frame, completing a single scan of the array, the beam may return to the top of the array in a vertical retrace to begin scanning the next frame. Preferably, the scanning is sufficiently fast that the user perceives all of the pixels as being present simultaneously, to thereby perceive the entire image as a whole. In some embodiments, the display system may utilize a laser and the scanned beam may be a laser beam, which may create an advantageously small exit pupil at the eye. In some embodiments, the steered exit pupil of the display systems herein may be understood to be the location at which the image light directed by the actuated reflector is incident the eye, and reflection of the image light at different angles by the actuated reflector provides different steered exit pupils by directing the image light to different locations. In some embodiments, the exit pupil may be advantageously small (e.g., 2 mm or less in diameter).

It will be appreciated that the diffractive layers forming the diffractive reflector may take various forms. In some embodiments, the diffractive layers may include Volume Phase Holograms which change relative orientations to steer an exit pupil to the eye of a user.

In some embodiments, the VRDs herein may comprise one or more Micro-electromechanical Systems (MEMS) devices for mechanical actuation of their structures. For example, the image light projector may include a MEMS mirror to direct light onto the diffractive reflector. Such a MEMS may be useful for increasing the range of angles that light reflects off of the diffractive reflector, to increase the number of possible exit pupil locations available to the display system.

Reference will now be made to the drawings, in which like reference numerals refer to like features throughout.

### Example Display Systems

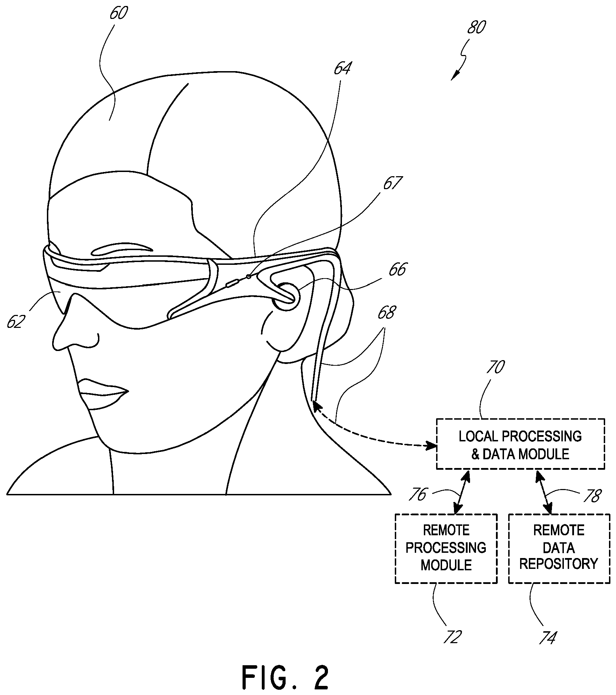

Figure 2 illustrates an example of wearable display system 80. The display system 80 includes a display 62, and various mechanical and electronic modules and systems to support the functioning of that display 62. The display 62 may be coupled to a frame 64, which is wearable by a display system user or viewer 60 and which is configured to position the display 62 in front of the eyes of the user 60. The display 62 may be considered eyewear in some embodiments. In some embodiments, a speaker 66 is coupled to the frame 64 and positioned adjacent the ear canal of the user 60 (another speaker, not shown, may optionally be positioned adjacent the other ear canal of the user to provide for stereo/shapeable sound control). The display system may also include one or more microphones 67 or other devices to detect sound. In some embodiments, the microphone is configured to allow the user to provide inputs or commands to the system 80 (e.g., the selection of voice menu commands, natural language questions, etc.) and/or may allow audio communication with other persons (e.g., with other users of similar display systems).

With continued reference to Figure 2, the display 62 is operatively coupled by communications link 68, such as by a wired lead or wireless connectivity, to a local data processing module 70 which may be mounted in a variety of configurations, such as fixedly attached to the frame 64, fixedly attached to a helmet or hat worn by the user, embedded in headphones, or otherwise removably attached to the user 60 (e.g., in a backpack-style configuration, in a belt-coupling style configuration). The local processing and data module 70 may comprise a hardware processor, as well as digital memory, such as non-volatile memory (e.g., flash memory or hard disk drives), both of which may be utilized to assist in the processing, caching, and storage of data. The data include data a) captured from sensors (which may be, e.g., operatively coupled to the frame 64 or otherwise attached to the user 60), such as image capture devices (such as cameras), microphones, inertial measurement units, accelerometers, compasses, GPS units, radio devices, gyros, and/or other sensors disclosed herein; and/or b) acquired and/or processed using remote processing module 72 and/or remote data repository 74 (including data relating to virtual content), possibly for passage to the display 62 after such processing or retrieval. The local processing and data module 70 may be operatively coupled by communication links 76, 78, such as via a wired or wireless communication links, to the remote processing module 72 and remote data repository 74 such that these remote modules 72, 74 are operatively coupled to each other and available as resources to the local processing and data module 70. In some embodiments, the local processing and data module 70 may include one or more of the image capture devices, microphones, inertial measurement units, accelerometers, compasses, GPS units, radio devices, and/or gyros. In some other embodiments, one or more of these sensors may be attached to the frame 64, or may be standalone structures that communicate with the local processing and data module 70 by wired or wireless communication pathways.

With continued reference to Figure 2, in some embodiments, the remote processing module 72 may comprise one or more processors configured to analyze and process data and/or image information. In some embodiments, the remote data repository 74 may comprise a digital data storage facility, which may be available through the internet or other networking configuration in a "cloud" resource configuration. In some embodiments, the remote data repository 74 may include one or more remote servers, which provide information, e.g., information for generating augmented reality content, to the local processing and data module 70 and/or the remote processing module 72. In some embodiments, all data is stored and all computations are performed in the local processing and data module, allowing fully autonomous use from a remote module.

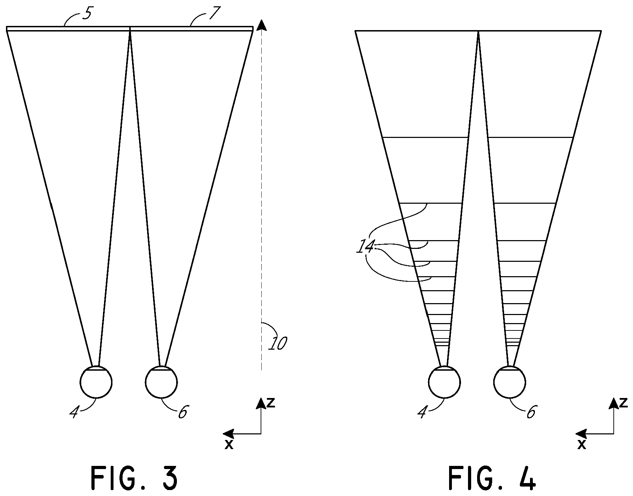

With reference now to Figure 3, the perception of an image as being "three-dimensional" or "3-D" may be achieved by providing slightly different presentations of the image to each eye of the viewer. Figure 3 illustrates a conventional display system for simulating three-dimensional imagery for a user. Two distinct images 5, 7-one for each eye 4, 6-are outputted to the user. The images 5, 7 are spaced from the eyes 4, 6 by a distance 10 along an optical or z-axis parallel to the line of sight of the viewer. The images 5, 7 are flat and the eyes 4, 6 may focus on the images by assuming a single accommodated state. Such systems rely on the human visual system to combine the images 5, 7 to provide a perception of depth and/or scale for the combined image.

It will be appreciated, however, that the human visual system is more complicated and providing a realistic perception of depth is more challenging. For example, many viewers of conventional "3-D" display systems find such systems to be uncomfortable or may not perceive a sense of depth at all. Without being limited by theory, it is believed that viewers of an object may perceive the object as being "three-dimensional" due to a combination of vergence and accommodation. Vergence movements (i.e., rotation of the eyes so that the pupils move toward or away from each other to converge the lines of sight of the eyes to fixate upon an object) of the two eyes relative to each other are closely associated with focusing (or "accommodation") of the lenses and pupils of the eyes. Under normal conditions, changing the focus of the lenses of the eyes, or accommodating the eyes, to change focus from one object to another object at a different distance will automatically cause a matching change in vergence to the same distance, under a relationship known as the "accommodation-vergence reflex," as well as pupil dilation or constriction. Likewise, a change in vergence will trigger a matching change in accommodation of lens shape and pupil size, under normal conditions. As noted herein, many stereoscopic or "3-D" display systems display a scene using slightly different presentations (and, so, slightly different images) to each eye such that a three-dimensional perspective is perceived by the human visual system. Such systems are uncomfortable for many viewers, however, since they, among other things, simply provide a different presentations of a scene, but with the eyes viewing all the image information at a single accommodated state, and work against the "accommodation-vergence reflex." Display systems that provide a better match between accommodation and vergence may form more realistic and comfortable simulations of three-dimensional imagery.

Figure 4 illustrates aspects of an approach for simulating three-dimensional imagery using multiple depth planes. With reference to Figure 4, objects at various distances from eyes 4, 6 on the z-axis are accommodated by the eyes 4, 6 so that those objects are in focus. The eyes (4 and 6) assume particular accommodated states to bring into focus objects at different distances along the z-axis. Consequently, a particular accommodated state may be associated with a particular one of depth planes 14, with has an associated focal distance, such that objects or parts of objects in a particular depth plane are in focus when the eye is in the accommodated state for that depth plane. In some embodiments, three-dimensional imagery may be simulated by providing different presentations of an image for each of the eyes 4, 6, and also by providing different presentations of the image corresponding to each of the depth planes. While shown as being separate for clarity of illustration, it will be appreciated that the fields of view of the eyes 4, 6 may overlap, for example, as distance along the z-axis increases. In addition, while shown as flat for ease of illustration, it will be appreciated that the contours of a depth plane may be curved in physical space, such that all features in a depth plane are in focus with the eye in a particular accommodated state.

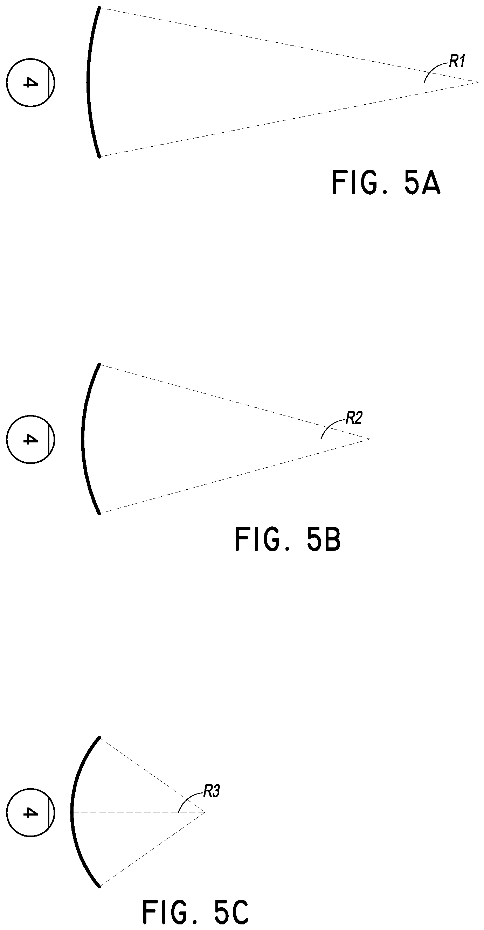

The distance between an object and the eye 4 or 6 may also change the amount of divergence of light from that object, as viewed by that eye. Figures 5A-5C illustrates relationships between distance and the divergence of light rays. The distance between the object and the eye 4 is represented by, in order of decreasing distance, R1, R2, and R3. As shown in Figures 5A-5C, the light rays become more divergent as distance to the object decreases. As distance increases, the light rays become more collimated. Stated another way, it may be that the light field produced by a point (the object or a part of the object) has a spherical wavefront curvature, which is a function of how far away the point is from the eye of the user. The curvature increases with decreasing distance between the object and the eye 4. Consequently, at different depth planes, the degree of divergence of light rays is also different, with the degree of divergence increasing with decreasing distance between depth planes and the viewer's eye 4. While only a single eye 4 is illustrated for clarity of illustration in Figures 5A-5C and other figures herein, it will be appreciated that the discussions regarding eye 4 may be applied to both eyes 4 and 6 of a viewer.

Without being limited by theory, it is believed that the human eye typically may interpret a finite number of depth planes to provide depth perception. Consequently, a highly believable simulation of perceived depth may be achieved by providing, to the eye, different presentations of an image corresponding to each of these limited number of depth planes. The different presentations may be separately focused by the viewer's eyes, thereby helping to provide the user with depth cues based on the accommodation of the eye required to bring into focus different image features for the scene located on different depth plane and/or based on observing different image features on different depth planes being out of focus. As discussed below, the display systems and optical architectures described herein may be compatible with upstream varifocal lens, which may facilitate accommodation-vergence matching.

Besides accommodation-vergence mismatch, optical efficiency is a significant problem with current wearable display technologies. Diffractive waveguides, which have been used due to their combination of eyebox size, overall volume, field of view and image quality, may be inefficient in that typically only a few percent of the light injected into the waveguides is transmitted to the eyes of a user. This inefficiency may result from both diffraction losses and the fact that, in most waveguide systems, waveguides distribute the projected light over a large eyebox area, as discussed herein. This inefficiency may negatively impact power consumption and display brightness, which may in turn require display devices to have large batteries, while also causing unwanted heat dissipation complications and low overall display brightness.

Compact and lightweight "all day, every day" wearable displays may require higher efficiency than readily available from currently existing technologies. Various challenges are associated with achieving highly efficient optical systems and devices for use in wearable display technologies. One strategy for increasing the efficiency of wearable displays is to output light with a small exit pupil, rather than distribute to the light over a large eyebox. However, because the image formed by such a device is only projected over a small area, the image may be lost or reduced in quality if the user's eye moves. Thus, some optical systems and devices utilizing small exit pupils use movable mirrors that direct light from a projection system on to another mirror which then directs the light into the user's eyes.

The currently existing pupil steering methods and systems, however, may not be sufficient for continuous use devices because they are deficient in one or more of volume/bulk requirements, efficiency, exit pupil steering range, image quality over the steering range, color fidelity, see-through vision quality, power consumption, and required eyewear form factor. Furthermore, the power consumption, speed, accuracy, efficiency, luminance, and form-factor of existing pupil steered devices may be unsatisfactory for regular, everyday use. Thus, both waveguide-based and pupil steered existing head-mounted display systems may be inadequate for various applications and in particular, for use in all day, every day wearable display devices.

Some embodiments herein are directed to head-mounted or near eye Virtual Retina Display (VRD) systems with actuated pupil steering, which may improve on various deficiencies of existing systems. VRD systems described herein may comprise optical architectures that may be highly efficient, providing improved size, weight, and luminance. Thus, VRDs described herein may be used in optical systems and devices capable of all day, everyday use.

Some embodiments described herein are directed to extremely efficient optical architectures for see-through wearable displays. In some embodiments, as discussed herein, instead of creating a large eyebox using a waveguide or conventional pupil expanded optics, the optical architectures may comprise systems that create a relatively small exit pupil at the eye (e.g. less than the size of the pupil of the eye, including 2 mm or less) that is actively steered to match the eye's position. Low etendue mismatch, which may be understood to describe the mismatch between the sizes of the exit pupil of a display device and the entrance pupil at the eye of a viewer, and high diffraction efficiencies, e.g., such as from volume phase holograms (VPHs), may lead to very low optical losses from laser light sources to the exit pupil. Furthermore, since the exit pupil of the systems and devices herein may be smaller than the pupil of the eye in some embodiments, and steered to follow a user's eye, losses associated with a large eyebox may be substantially reduced or eliminated. Advantageously, the majority of light produced by the display light source may be transferred to the user's retina, rather than distributed over a larger area.

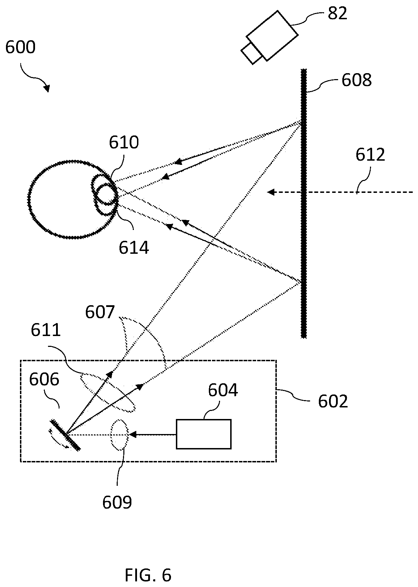

Figure 6 illustrates an example of an optics architecture for displaying virtual content by steering image light into an eye of a user. The optics architecture 600 may be a VRD architecture and comprises an image light projector 602 for outputting image light (that is, light encoded with image content to, e.g., provide pixels with the desired color and/or brightness). The image light projector 602 may include a light source 604 for producing image light. In some embodiments, the image light projector 602 may include a modulator for varying the intensity and/or color of light rays outputted by image light projector 602 to encode the output light with image information. In some other embodiments, the intensity and/or color of the outputted light may be controlled by directly controlling the light source 604.

In some embodiments, the image light projector 602 may be a scanning display in which the output of light is changed based upon the location and/or direction of a light output end of the scanning display. In this way, different display elements (e.g., pixels) may be formed as the output ends scans across an area, with the light being outputted in a particular location corresponding to the desired pixel for the application. In some embodiments, scanning may be achieved using a scanning mirror 606, which moves (e.g., rotates along one or more axes) to direct light outputted from the light source 604 in desired directions for light scanning.

In some embodiments, the image light projector 602 may be a scanning display taking the form of a laser scanning projector that outputs laser light. For example, the image light projector 602 may comprise a laser light source 604 directing light to a MEMS mirror 606. It will be appreciated that the laser scanning projector 602 may comprise one or more additional lasers, MEMS, mirrors, galvanometer scanners, collimators, upstream varifocal or other optical components 609, 611. It will be appreciated that the optics 609, 611 may be projection optics and/or maybe variable focus lens elements configured to modify the wavefront divergence of outputted light, to provide different accommodation cues for placing objects of different depth planes. The laser scanning projector 602 may comprise one laser light source for single-color projection, or multiple light sources outputting light of different wavelengths for different component colors to form full color images (e.g. three sources for RGB (red, green, and blue) full color projection). In addition, the laser scanning projector 602 may comprise a controller and digital-to-analog converter (DAC) to convert digital control signals to analog signals that control scanning components in the laser scanning projector 602. In some embodiments, one or more processors, such as the processing modules 70 and/or 72 of display system 62 may comprise the controller for laser scanning projector 602.

As discussed herein, in some embodiments, the MEMS 606 may comprise an oscillating scanning mirror to scan and redirect light along one or more axes to diffractive reflector 608. As discussed herein, the scanning may be utilized to draw an image on a retina of the user.

It will be appreciated that MEMS may refer to integrated devices or systems that combine mechanical and electrical components. MEMS may be fabricated using integrated circuit (IC) batch processing techniques and may range in size on a micrometer or millimeter scale. MEMS may comprise mechanical microstructures, microsensors, microactuators, and microelectronics, each integrated onto the same substrate. The micromechanical components may be fabricated by manipulations of silicon and other substrates using micromachining processes known in the art. Processes such as bulk and surface micromachining, as well as high-aspect-ratio micromachining (HARM) selectively remove parts of the silicon or add additional structural layers to form the mechanical and electromechanical components. MEMS have the ability to sense, control, and actuate on a micro-scale, which may generate effects on a macro-scale. Their small size, low cost, low power consumption, mechanical durability, high accuracy, and low-cost batch processing provide various advantages for use in display devices.

In some embodiments, the MEMS described herein may comprise a scanning mirror projector, a type of micro-mirror actuator for dynamic light modulation. In some embodiments, the scanning mirror projector may comprise micro-size motors to move one or more mirrors in one or more dimensions. A laser beam pointed at the one or more mirrors may be precisely deflected and steered by the scanning mirrors, which may be translated and/or rotated by the motors, to reach a target point. Scanning mirror projectors may be advantageous as they may operate in ultra-low power environments, may provide exceptional repeatability and reliability, and provide rapid optical beam scanning in one or more axes.

A MEMS scanning mirror as used herein may comprise, for example, a cylindrical, rectangular or square micro-mirror that is adapted to move and to deflect light over time. The micro-mirror may be connected by torsion arms to a fixed part and may tilt and oscillate along one or more axes. Different actuation principles may be used, including, e.g., electrostatic, thermal, electro-magnetic or piezo-electric. A MEMS scanning mirror may comprise a single micro-mirror which is configured to oscillate along one or more oscillation axes to scan light along either or both the horizontal and vertical axes. Alternatively, the MEMS device may comprise a first MEMS scanning mirror which is configured to oscillate a long a first oscillation axis, and a second MEMS scanning mirror which is configured to oscillate a long a second oscillation axis. In some embodiments, in a two-mirror arrangement, the first and the second MEMS scanning mirrors may be precisely positioned such that the oscillatory axes are orthogonal.

With continued reference to Figure 6, the redirected light may comprise one or more rays 607. Where the architecture 600 is part of an augmented reality display system, the diffractive reflector 608 may be an optical combiner and may be provided to redirect rays 607 to a steered exit pupil 610 while also transmitting world light 612. Preferably, the location of the steered exit pupil 610 matches the location of a pupil of an eye 614. It will be appreciated that, in the various drawings herein, while one eye and architecture may be illustrated, the viewer may have another eye and the display system may be provided with another architecture, such as the architecture 600, to provide image light to that other eye.

The diffractive reflector 608 may comprise one or more pupil steering mechanisms, along with additional optical elements, as described in more detail herein. For example, the diffractive reflector 608 may comprise one or more VPH gratings or liquid crystal gratings and functional beam steering optics to steer the exit pupil 610 in the visual plane of the eye 614 of a user 60 to match the position of the eye's entrance pupil. In some embodiments, the architecture 600 may be part of the virtual reality display system which is not transmitted light to the eye 614. In such embodiments, the diffractive reflector 608 may be understood to simply be a reflective optic for beam steering.

It will be appreciated that VPHs may include optical gratings comprising periodic phase structures for diffracting different wavelengths of light from a common input path into different angular output paths. A VPH grating is formed in a layer of transmissive material, e.g., dichromated gelatin, which is sealed between two layers of clear glass or fused silica. The phase of incident light is modulated as it passes through the optically thick film that has a periodic differential hardness or refractive index. VPH gratings differ from conventional gratings, in which the depth of a surface relief pattern modulates the phase of the incident light. However, similar to conventional reflection gratings, the spatial frequency of the periodic structure determines the spectral dispersion, or angular separation of wavelength components, in the diffracted light. The average refractive index, the refractive index differential or modulation, and the thickness of the film determine the efficiency, polarization, and bandwidth performance characteristics of the VPH. VPH gratings may be advantageous in that the optical structure of the VPH is durable, cleanable, customizable, stable, and has excellent optical characteristics. VPH gratings may comprise reflective or transmissive VPH gratings.

Unlike conventional gratings, VPH gratings provide enhanced strength, robustness, and environmental durability as the grating structure is protected by external glass and/or surface coating. VPH gratings may be combined with other optical elements to enable additional or enhanced optical properties. Classic geometric optical elements such as the lenses in VR and AR head-mounted displays (HMDs) cannot meet the weight or size requirements of display seeking the form factor of corrective eyeglasses/sunglasses. However, the geometry of VPH gratings enables compact, high performance system geometries that cannot be realized using conventional reflection gratings. Conventional gratings normally work in the Littrow geometry, in which the diffracted/dispersed light reflects back toward the source of incident light. In contrast, due to the transmission geometry of a VPH grating, the incident light and diffracted light may be located on opposite sides of the grating plane. As a result, VPH gratings allow incident light and diffracted light to be operated on by independent optics and components such as detectors, fibers, or MEMS. Furthermore, imaging optics may be placed directly adjacent to the grating, which may minimize system size and increase performance in some applications. In some embodiments, the use of a polarization-insensitive VPH grating structures may eliminate the need for polarization splitting system configurations, further reducing component count and device size. VPH gratings may be made with line frequencies from under 300 lines/mm to over 6000 lines/mm. VPH gratings may also be referred to as Holographic Optical Elements (HOE) herein.

With continued reference to Figure 6, the example VRD architecture 600 may have various advantages over existing architectures in that the architecture may be extremely compact and power efficient and may project an image with substantially no coherent artifacts. The VRD architecture 600 may also produce a very small exit pupil relative to a waveguide-based display, such that a majority of the projected light enters the pupil of a user. In some embodiments, substantially all the projected light from example optical architecture 600 enters the pupil of a user. In contrast, other display systems such as waveguide-based display systems may produce a large eyebox, wherein power is widely distributed and only a small fraction of projected light enters the pupil of a user.

Additionally, the example optical architecture 600 may be used to produce a compact display system in a device having a large field of view (FOV), high brightness, high efficiency, and controlled continuous vergence-accommodation matching via an upstream varifocal. The FOV indicates the angle(s), vertically as well as horizontally, subtended at a user's eye, that the diffractive reflector 608 displays images in relation to the outside view. A narrower FOV would result in limited viewing near the center of a user's visual field, whereas a wide FOV allows a broader view.

Advantageously, as discussed herein, the example VRD architecture 600 may be smaller than a comparable device since it does not require pupil expanding optics and may be folded into a wearable eyewear device. In addition, the efficiency of the example VRD architecture 600 may be relatively high because only a small amount of light may be wasted (that is, only a minority of the light produced by the light source 604 does not reach the pupil of the eye 614) due to light steering and the small size of the exit pupil 614 created by the architecture. Finally, high brightness is achieved since a majority of the light produced by the image light projector 602 is actively directed into the active eyebox via the small exit pupil 610, rather than distributed over a larger eyebox.

In some embodiments, the example VRD architecture 600 is capable of producing a steered exit pupil 610 accounting for rotation and lateral movement of a user's eye over a portion of or over the entirety of the FOV. In some embodiments, the VRD architecture 600 is capable of accounting for both horizontal and vertical eye rotation. In some embodiments, the VRD architecture 600 is capable of accounting for both horizontal and vertical eye rotation over the entire physically possible rotational range of an eye. For example, in some embodiments, the VRD architecture 600 may be capable of accounting for vertical eye rotation of about 50 degrees (e.g. 25 degrees downward and 25 degrees upward from the horizontal sight line). In some embodiments, the VRD architecture 600 may be capable of accounting for upward vertical eye rotation of about 1 degree, about 1.5 degrees, about 2 degrees, about 2.5 degrees, about 3 degrees, about 3.5 degrees, about 4 degrees, about 4.5 degrees, about 5 degrees, about 5.5 degrees, about 6 degrees, about 6.5 degrees, about 7 degrees, about 7.5 degrees, about 8 degrees, about 8.5 degrees, about 9 degrees, about 9.5 degrees, about 10 degrees, about 10.5 degrees, about 11 degrees, about 11.5 degrees, about 12 degrees, about 12.5 degrees, about 13 degrees, about 13.5 degrees, about 14 degrees, about 14.5 degrees, about 15 degrees, about 15.5 degrees, about 16 degrees, about 16.5 degrees, about 17 degrees, about 17.5 degrees, about 18 degrees, about 18.5 degrees, about 19 degrees, about 19.5 degrees, about 20 degrees, about 20.5 degrees, about 21 degrees, about 21.5 degrees, about 22 degrees, about 22.5 degrees, about 23 degrees, about 23.5 degrees, about 24 degrees, about 24.5 degrees, about 25 degrees, about 25.5 degrees, about 26 degrees, about 26.5 degrees, about 27 degrees, about 27.5 degrees, about 28 degrees, about 28.5 degrees, about 29 degrees, about 29.5 degrees, about 30 degrees, or values between any of the aforementioned values.

In some embodiments, the VRD architecture 600 may be capable of accounting for downward vertical eye rotation of about 1 degree, about 1.5 degrees, about 2 degrees, about 2.5 degrees, about 3 degrees, about 3.5 degrees, about 4 degrees, about 4.5 degrees, about 5 degrees, about 5.5 degrees, about 6 degrees, about 6.5 degrees, about 7 degrees, about 7.5 degrees, about 8 degrees, about 8.5 degrees, about 9 degrees, about 9.5 degrees, about 10 degrees, about 10.5 degrees, about 11 degrees, about 11.5 degrees, about 12 degrees, about 12.5 degrees, about 13 degrees, about 13.5 degrees, about 14 degrees, about 14.5 degrees, about 15 degrees, about 15.5 degrees, about 16 degrees, about 16.5 degrees, about 17 degrees, about 17.5 degrees, about 18 degrees, about 18.5 degrees, about 19 degrees, about 19.5 degrees, about 20 degrees, about 20.5 degrees, about 21 degrees, about 21.5 degrees, about 22 degrees, about 22.5 degrees, about 23 degrees, about 23.5 degrees, about 24 degrees, about 24.5 degrees, about 25 degrees, about 25.5 degrees, about 26 degrees, about 26.5 degrees, about 27 degrees, about 27.5 degrees, about 28 degrees, about 28.5 degrees, about 29 degrees, about 29.5 degrees, about 30 degrees, or values between any of the aforementioned values.

In some embodiments, the VRD architecture 600 may be capable of accounting for horizontal eye rotation of about 70 degrees (e.g. 35 degrees in the left direction and 35 degrees in the right direction from the vertical central sight line). In some embodiments, the VRD architecture 600 may be capable of accounting for left horizontal eye rotation of about 1 degree, about 1.5 degrees, about 2 degrees, about 2.5 degrees, about 3 degrees, about 3.5 degrees, about 4 degrees, about 4.5 degrees, about 5 degrees, about 5.5 degrees, about 6 degrees, about 6.5 degrees, about 7 degrees, about 7.5 degrees, about 8 degrees, about 8.5 degrees, about 9 degrees, about 9.5 degrees, about 10 degrees, about 10.5 degrees, about 11 degrees, about 11.5 degrees, about 12 degrees, about 12.5 degrees, about 13 degrees, about 13.5 degrees, about 14 degrees, about 14.5 degrees, about 15 degrees, about 15.5 degrees, about 16 degrees, about 16.5 degrees, about 17 degrees, about 17.5 degrees, about 18 degrees, about 18.5 degrees, about 19 degrees, about 19.5 degrees, about 20 degrees, about 20.5 degrees, about 21 degrees, about 21.5 degrees, about 22 degrees, about 22.5 degrees, about 23 degrees, about 23.5 degrees, about 24 degrees, about 24.5 degrees, about 25 degrees, about 25.5 degrees, about 26 degrees, about 26.5 degrees, about 27 degrees, about 27.5 degrees, about 28 degrees, about 28.5 degrees, about 29 degrees, about 29.5 degrees, about 30 degrees, about 30.5 degrees, about 31 degrees, about 31.5 degrees, about 32 degrees, about 32.5 degrees, about 33 degrees, about 33.5 degrees, about 34 degrees, about 34.5 degrees, about 35 degrees, or values between any of the aforementioned values.

In some embodiments, the VRD architecture 600 may be capable of accounting for right horizontal eye rotation of about 1 degree, about 1.5 degrees, about 2 degrees, about 2.5 degrees, about 3 degrees, about 3.5 degrees, about 4 degrees, about 4.5 degrees, about 5 degrees, about 5.5 degrees, about 6 degrees, about 6.5 degrees, about 7 degrees, about 7.5 degrees, about 8 degrees, about 8.5 degrees, about 9 degrees, about 9.5 degrees, about 10 degrees, about 10.5 degrees, about 11 degrees, about 11.5 degrees, about 12 degrees, about 12.5 degrees, about 13 degrees, about 13.5 degrees, about 14 degrees, about 14.5 degrees, about 15 degrees, about 15.5 degrees, about 16 degrees, about 16.5 degrees, about 17 degrees, about 17.5 degrees, about 18 degrees, about 18.5 degrees, about 19 degrees, about 19.5 degrees, about 20 degrees, about 20.5 degrees, about 21 degrees, about 21.5 degrees, about 22 degrees, about 22.5 degrees, about 23 degrees, about 23.5 degrees, about 24 degrees, about 24.5 degrees, about 25 degrees, about 25.5 degrees, about 26 degrees, about 26.5 degrees, about 27 degrees, about 27.5 degrees, about 28 degrees, about 28.5 degrees, about 29 degrees, about 29.5 degrees, about 30 degrees, about 30.5 degrees, about 31 degrees, about 31.5 degrees, about 32 degrees, about 32.5 degrees, about 33 degrees, about 33.5 degrees, about 34 degrees, about 34.5 degrees, about 35 degrees, or values between any of the aforementioned values.

With continued reference to Figure 6, in some embodiments, a camera assembly 82 (e.g., a digital camera, including visible light and infrared light cameras) may be provided to capture images of the eye to, e.g., track the position of the pupil of the eye. As used herein, a camera may be any image capture device. In some embodiments, the camera assembly 82 may include an image capture device and a light source to project light (e.g., infrared light) to the eye, which may then be reflected by the eye and detected by the image capture device. In some embodiments, the camera assembly 82 may be attached to the frame 64 (Figure 2) and may be in electrical communication with the processing modules 70 and/or 72 (Figure 2), which may process image information from the camera assembly 82. In some embodiments, one camera assembly 82 may be utilized for each eye, to separately monitor each eye.

The camera assembly 82 may be integrated into an inward-facing imaging system which may track the eye movements of the user. The inward-facing imaging system may track either one eye's movements or both eyes' movements. The inward-facing imaging system may be attached to the frame 64 and may be in electrical communication with the processing modules 70 or 72, which may process image information acquired by the inward-facing imaging system to determine, e.g., the pupil diameters or orientations of the eyes, eye movements or eye pose of the user 60. The inward-facing imaging system may include one or more cameras as part of the camera assembly 82. For example, at least one camera may be used to image each eye. The images acquired by the cameras may be used to determine pupil size or eye pose for each eye separately, thereby allowing presentation of image information to each eye to be dynamically tailored to that eye.

The camera assembly 82 may comprise, for example, video-based eye tracking systems including, for example, near-eye tracking (on-axis or off-axis), remote tracking, model-based tracking, or regression-based tracking, with a single camera or multi-camera input. Near-eye tracking may be divided into on-axis and off-axis configurations depending on the camera position viewing the eye. Off-axis placement may occupy less space, sometimes at the cost of non-uniform accuracy in gaze estimation.

In some embodiments, a display system incorporating the example VRD architecture 600 may also need to account for the varying interpupillary distance (IPD) of users. IPD is a significant design consideration for binocular viewing systems, including head-mounted displays, where both eye pupils are desirably positioned within the exit pupils of the viewing system. IPD measurements may be used in the design of such systems to specify the range of lateral adjustment of the exit optics or eyepieces. IPD may also be used to describe the distance between the exit pupils of a binocular optical system. In some embodiments, varying IPD between users may be accounted for during fitting of a display device to each user.

One potential challenge in utilization of the VRD architecture 600 is in the creation of temporal visual effects and, relatedly, in the preservation of a realistic and comfortable user experience through continuous projection of a high quality image to the retina of the eye despite eye movement. To maintain high image quality in the eye of a user with a small exit pupil, a precise and fast user pupil sensing, exit pupil steering, and image rendering loop is preferably implemented. As such, adequate pupil steering hardware and software may be employed to produce a satisfactory loop.

Some traditional approaches for exit pupil steering involve passively expanding the exit pupil of a VRD using various pupil replication methods. However, in some embodiments herein, the example VRD architecture 600 does not replicate the pupil. Instead, the exit pupil 614 of the VRDs herein may be dynamically steered to follow the eye.

Several variations of exit pupil steering, including mechanical and non-mechanical pupil steering, for a VRD are described herein. As discussed herein, the underlying VRD architecture may comprise an image light projector mounted, for example, near the temple of a user, and projecting light onto a diffractive reflector which reflects the projected light to the eye. In some embodiments, exit pupil steering mechanisms are integrated into the diffractive reflector and may involve a stack of diffractive layers, e.g., combinations of one or more VPHs, and/or liquid crystal gratings. The pupil steering mechanisms described herein may also be compatible with upstream varifocal lens structures for providing parable accommodation cues, which may be beneficial for mitigating vergence-accommodation conflict (VAC). As discussed herein, VAC may be problematic in near eye displays, and challenging to address in waveguide-based displays. By contrast, varifocal VRD systems may utilize small, low-power varifocal lenses to provide varying levels of wavefront divergence for varying accommodation cues. Using the pupil steering mechanisms herein in combination with a varifocal structure upstream of the diffractive combiner may advantageously provide a tunable, variable focus display.

### Non-Mechanical Exit Pupil Steering Mechanisms

Some exit pupil steering mechanisms described herein may be non-mechanical in their actuation. In some embodiments, non-mechanical beam steering may advantageously provide high efficiency, low wear, high speed, and/or low failure rates. To achieve non-mechanical beam control, various diverse approaches have been explored, including microlens arrays, electrooptic prisms, and diffractive acousto-optic techniques. Undesirably, these approaches may be plagued by one or more of the following limitations: low throughput, scattering, small steering angle/aperture, and large physical size.

Some non-mechanical exit pupil steering mechanisms herein may comprise electronically actuated pupil steering mechanisms. Some of these pupil steering mechanisms may be based on the polarization-sensitive properties of liquid crystal polarization gratings (LCPGs). For example, some electronically actuated pupil steering mechanisms may comprise a combiner comprising one or more LCPGs in combination with electronically addressable polarization switches to actively steer one or more exit pupils. Devices incorporating electronic pupil steering may be tailored to operate at nearly any wavelength, including wavelengths at least from visible to infrared wavelengths.

Electronically actuated pupil steering mechanisms may be used to build efficient optical architectures for see-through wearable displays. As discussed herein, instead of creating a large eye box using a waveguide or conventional pupil expanding optics, optical systems with electronically actuated pupil steering mechanisms may create a small exit pupil at the eye that is actively steered to match the eye's position. Stacking LCPGs, other diffractive layers (such as VPHs), and/or electronically addressable polarization switches may enable the construction of a transparent combiner with a discreet amount of switchable exit pupil locations.

In some embodiments, electronically actuated exit pupil steering may be used in, for example, an off-axis diffractive VRD. The electronically actuated pupil steering mechanisms herein may also be compatible with upstream varifocal structures for mitigating vergence-accommodation conflict (VAC).

In some embodiments, electronically actuated exit pupil steering mechanisms are integrated into a diffractive combiner and comprise combinations of layers of polarization selective and non-selective diffractive elements (e.g., including LCPG, HOEs, and other volume phase gratings). Pupil steering may be achieved by placing polarization switches between the polarization selective gratings to account for the different orders of the gratings depending on whether the polarization switches are switched to ON or OFF. In some embodiments, the number of addressable steering positions is 2ⁿ, where n is the number of stacked switches.

### LCPG with Polarization Switches

Some optical combiners described herein may comprise electronically actuated pupil steering mechanisms comprising non-Bragg selective LCPGs. In some embodiments, non-Bragg selective LCPGs may be paired with a world light compensation unit to allow world light to pass through the combiner. Non-Bragg selective LCPGs are generally non-transparent to world light. Thus, a combiner comprising non-Bragg selective LCPGs may require an additional stack of LCPGs to compensate for the world light. The additional stack of LCPGs may put a constraint on the number of layers that may be used for pupil steering if a light, compact display device is desired. As a result, the number of layers (i.e. stacked switches) may be a limiting factor in combiners utilizing non-Bragg selective LCPGs for electronically actuated pupil steering as increasing the number of layers reduces the transparency of the combiner.

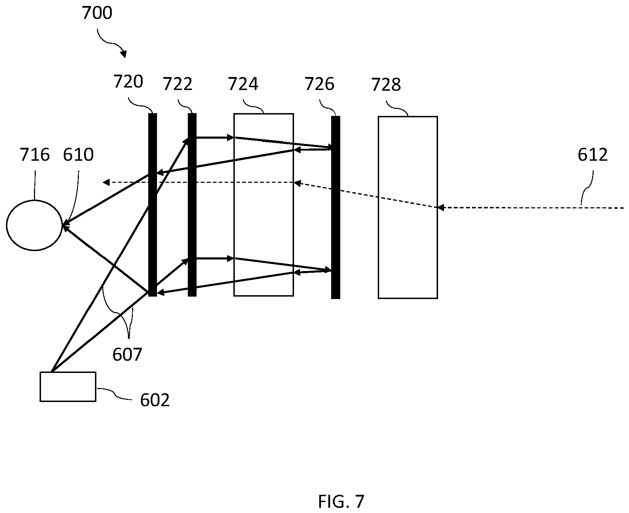

Figure 7 illustrates an example of an optical architecture 700 for an electronically actuated assembly for steering image light into an eye of a user. In some embodiments the optical architecture 700 may be used to form a diffractive reflector for use in a VRD display, such as a diffractive reflector 608 for the display system of Figure 6. Optical architecture 700 comprises a first HOE 720, a second HOE 722, a beam steering unit (BSU) 724, a dichroic mirror 726, and a world compensator 728. In the illustrated embodiment, polarized light beams 607 projected from an image light projector 602 passes unaffected through a first polarization selective HOE 720 and is collimated by a second polarization selective HOE 722 towards BSU 724. The BSU 724 steers light selectively based on the handedness of the light's polarization and the ON/OFF status of LCPGs in the BSU 724, in a single or double pass mode. In the illustrated double pass embodiment of Figure 7, the incident light beams 607 from the second HOE 722 are steered a first time by the BSU 724 to a dichroic mirror 726, which reflects the light beams 607 back to the BSU 724 towards a user's eye 716. After reflection from the dichroic mirror 726, the BSU 724 dynamically steers the light beams 607 a second time back to the second HOE 722, through which the light beams 607 pass through unaffected, and the first HOE 720, which focuses the light to the steered exit pupil 610.

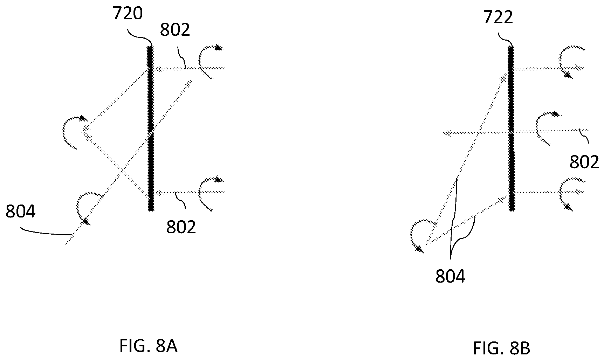

Figures 8A and 8B illustrate the optical functions of the first HOE 720 and the second HOE 722, respectively. The first HOE 720 may have an optical function comprising focusing right circular polarization light 802 and leaving left circular polarization light 804 unaffected. The second HOE 704 may have an optical function comprising collimating left circular polarization light 804 and leaving right circular polarization light 802 unaffected. Thus, in the illustrated embodiment of Figure 7, light beams 607 are left circular polarized when projected from image light projector 602. The left circular polarized light beams 607 are unaffected by the first HOE and collimated by the second HOE 722. However, after passing through the BSU 724 (Figure 7) on a first pass away from eye 716 and on a second pass toward eye 716, the light beams 607 may have their polarization switched such that they are right circular polarized at the time of the second pass through the first HOE 720 and the second HOE 722 toward the eye 716. Thus, upon the second pass, light beams 607 may be unaffected by the second HOE 722 and focused to the exit pupil 610 by the first HOE 720,

In some embodiments, the optical functions of the first HOE 720 and second HOE 722 may be interchangeable such that the first HOE 720 performs the above described optical function of the second HOE 722 and vice versa. In the illustrated embodiment of Figure 7, light beams 607 are initially left circular polarized such that they are unaffected by first HOE 720 and collimated by the second HOE 722. After reflecting from the dichroic mirror 726 and leaving the BSU 724 towards the eye 716, however, the light beams 607 may be right circular polarized such that they pass through the second HOE 722 unaffected and are focused at the exit pupil 610 by the first HOE 720.

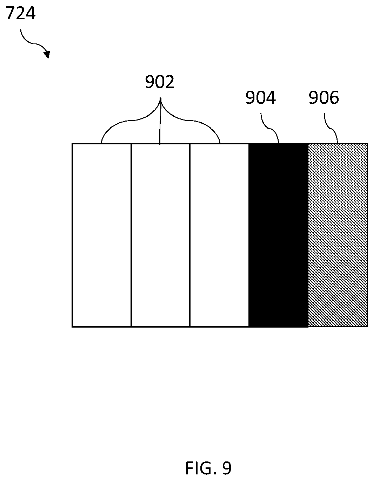

Figure 9 illustrates an example of an electronically actuated beam steering unit (BSU) for the optical architecture of Figure 7. The BSU 724 may comprise one or more LCPGs 902, each forming a diffractive layer. In some embodiments, each of the LCPGs may comprise switchable nematic LCPGs having continuous in-plane bend-splay patterns. Without being limited by theory, the theoretical diffraction efficiencies of each of the LCPGs may be expressed as: η₀ = cos²(Γ/2), η_{±1} = (1/2) (1±S^{'}₃) sin² (Γ/2), where ηₘ is the diffraction efficiency of the m order, Γ = 2πΔnd/λ is the retardation of the LCPG layer, λ is the wavelength of incident light, and S^{'}₃ = S₃/S₀ is the normalized Stokes parameter corresponding to the ellipticity of the incident light. In some embodiments, incident light may be diffracted into only one of the first orders when input is circular polarized (S^{'}₃ = ±1) and the retardation of the LC layer is half-wave (Δnd = λ/2).

When the input light beams 607 are circularly polarized, the first HOE 720 and/or the second HOE 722 ensure that the input light to the LCPGs of the BSU 724 is either of the two orthogonal (left/right) circular polarization states. Depending on the handedness of polarization, each LCPG diffracts the beam into one of the first orders (+θ or -θ) and flips its handedness. When voltage is applied on the LCPG (V >> V_{threshold}) the grating profile is effectively erased (i.e., Δn ≈ 0) and the incident beam passes through the LCPG, preserving its polarization state. The diffraction angle may be established by the classical grating equation θₒᵤₜ = sin⁻¹(mλ/Λ + sin θᵢₙ), where the order m depends on the incident polarization and A is the grating period.

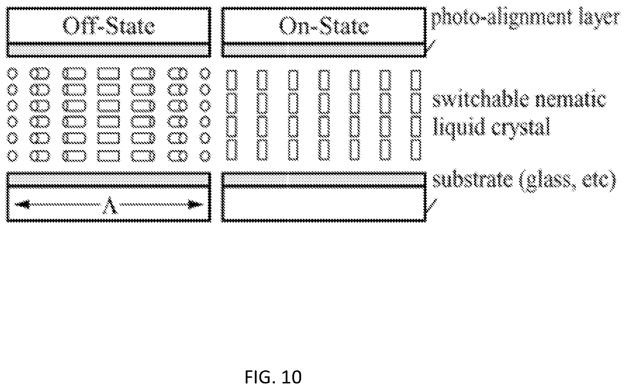

Figure 10 illustrates examples of a liquid crystal polarization grating (LCPG) in an Off-State and an On-State. Without being limited by theory, LCPGs may be understood to be similar to traditional diffraction gratings utilizing a periodic structure to steer light. However, LCPGs use polarization modulation instead of pure phase or amplitude modulation, which may provide high first-order efficiencies exceeding 99.8% in some cases. Liquid crystals are well-suited for a polarization grating medium, as they are composed of highly anisotropic molecules whose orientation may be manipulated by electric fields. The high efficiency and compact size may make LCPG's suitable for coherent beam 's steering and active image scanning systems. When an active LCPG is switched into an ON state (i.e. voltage is applied across electrodes above a certain voltage threshold), its grating structure disappears, resulting in a third undeflected and unpolarized light path. Because each element in a stack of LCPGs may be switched off, added, or subtracted from the net deflection, a relatively small stack may provide a large set of deflection angles, enabling a wide range of angles in two dimensions to be achieved with a small number of stack elements.

Referring again to Figure 9, the BSU 724 may comprise one or more LCPGs 902. The example BSU 724 of Figure 9 comprises three LCPGs 902 (n=3). However, in some embodiments, the BSU 724 may comprise 1, 2, 3, 4, 5, 6, 7, 8, 9, 10, 11, 12, 13, 14, 16, 17, 18, 19, 20, 21, 22, 23, 24, or 25 LCPGs 902. However, in some embodiments, because each LCPG layer may cause some optical loss, the number of LCPGs 902 within BSU 724 may be low to increase transparency and reduce the size of a display device utilizing optical architecture 700.

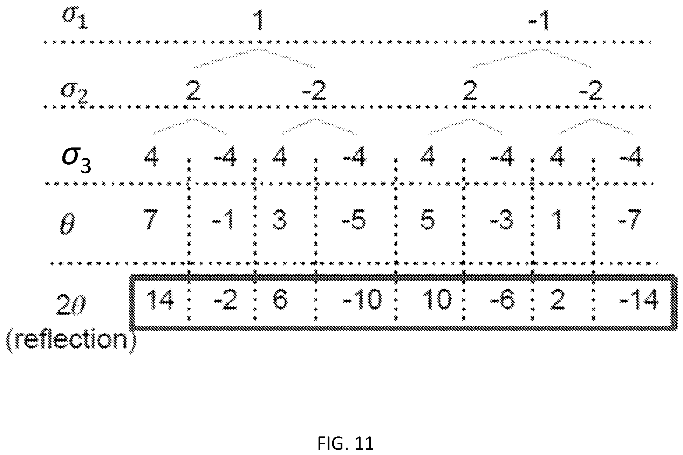

Without being limited by theory, it is believed that if the spatial frequency of grating i + 1 of the LCPGs 902 is different from the spatial frequency of grating i of the LCPGs 902, the number of possible diffraction angles θ may be equal to 2ⁿ, where n is the number of LCPGs 902 in the BSU 724. Figure 11 illustrates example diffraction angles θ that may be achieved using a BSU 724 with n = 3 and where the spatial frequency σᵢ₊₁ = 2σᵢ. As shown, a beam steering unit having n = 3 LCPGs may achieve 2³ = 8 equally spaced diffraction angles. In the double pass configuration, the diffraction angles are doubled to 2θ.

With reference again to Figure 9, in some embodiments, the BSU 724 may also comprise one or more wave plates 904. Wave plates 904 may be constructed of a birefringent material such as quartz, mica, or plastic, for which the index of refraction is different depending on the polarization of incident light. The behavior of a wave plate may depend on the thickness of the crystal, the wavelength of light, and the variation of the index of refraction. By appropriate choice of the relationship between these parameters, it may be possible to introduce a controlled phase shift between the two polarization components of a light wave, thereby altering its polarization. In some embodiments, the one or more wave plates 904 comprise at least one quarter wave plate, which converts linearly polarized light into circularly polarized light and vice versa. Furthermore, in some embodiments, the BSU 724 may comprise one or more VPH gratings 906.

The optical function of the BSU 724, in combination with the first HOE 720, the second HOE 722, and the dichroic mirror 726 may be to direct light beams 607 from the image light projector 602 to a specific steered exit pupil 610 to produce an image at the retina of the eye 716. One or more of LCPGs 902 in the BSU 724 may be continuously switched to ON or OFF states to steer the light beams 607 to 2ⁿ different diffraction angles based on the detected movement of the eye 716.

Referring again to Figure 7, the optical architecture 700 may also comprise a world compensator 728, which may comprise an identical, but oppositely driven optical structure as BSU 724. The world compensator may function by performing the reverse optical function of the BSU 724 on world light 612 such that there is minimal or no net optical effect on the world light 612. As described above, because non-Bragg selective LCPGs generally comprise gratings that are non-transparent to world light, the world compensator 728 may be utilized to allow world light 612 to reach the eye 716.

### Bragg Selective LCPG

Some electronically actuated pupil steering mechanisms may comprise Bragg selective LCPGs. In some embodiments, Bragg selective LCPGs may be more transparent than comparable non-Bragg selective LCPGs. Thus, in some embodiments, combiners and optical architectures comprising Bragg selective LCPGs may comprise more layers than combiners and optical architectures comprising non-Bragg selective LCPGs, while maintaining a similar or even higher level of transparency. Increasing the number of layers within the optical architecture may enable an increase in the amount of exit pupil steering positions that may be achieved by the combiner, which may increase the accuracy, precision, and/or speed of pupil steering. Furthermore, since Bragg selective LCPGs may be transparent, world light may pass through a combiner utilizing these LCPGs without requiring additional world compensation optics. Thus, in some embodiments, combiners having Bragg selective LCPGs may provide an enhanced user experience and image projection compared to display systems employing other pupil steering mechanisms.

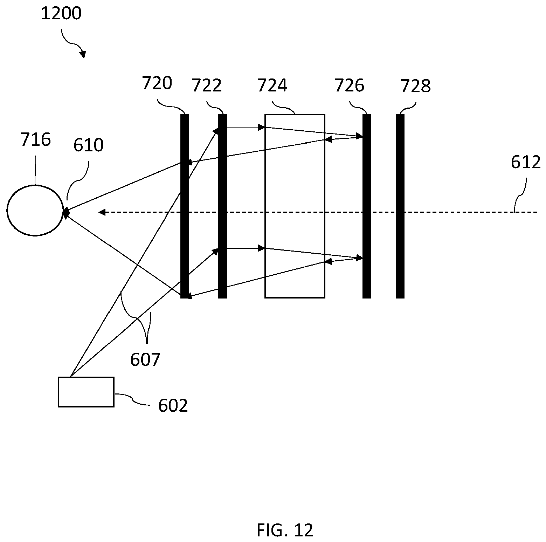

Figure 12 illustrates another example of an optical architecture 1200 for an electronically actuated assembly for steering image light into an eye of a user. In some embodiments the optical architecture 1200 may be used to form a diffractive reflector for use in a VRD display, such as diffractive reflector 608 of Figure 6. Optical architecture 1200 comprises a first HOE 720, a second HOE 722, a beam steering unit (BSU) 724, a dichroic mirror 726, and a polarizer 728. In the illustrated embodiment, polarized light beams 607 projected from an image light projector 602 passes unaffected through a first polarization selective HOE 720 and is collimated by a second polarization selective HOE 722 towards BSU 724. The BSU 724 steers light selectively based on the handedness of the light's polarization and the ON/OFF status of Bragg selective LCPGs in the BSU 724, in a single or double pass mode. In the illustrated double pass embodiment of Figure 12, the incident light beams 607 from the second HOE 722 are steered a first time by the BSU 724 to a dichroic mirror 726, which reflects the light beams 607 back to the BSU 724 towards a user's eye 716. After reflection from the dichroic mirror 726, the BSU 724 dynamically steers the light beams 607 a second time back to the second HOE 722, through which the light beams 607 pass through unaffected, and the first HOE 720, which focuses the light to the steered exit pupil 610.

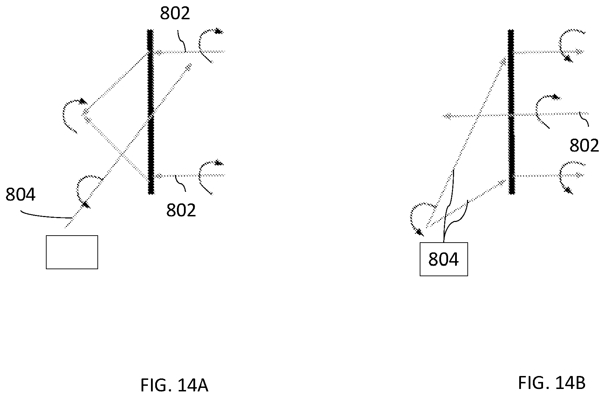

Figures 14A and 14B illustrate examples of optical functions of holographic optical elements of the optical architecture of Figure 12. The first HOE 720 may have an optical function including focusing right circular polarization incident light 802 and leaving left circular polarization incident light 804 unaffected. The second HOE 704 may have an optical function including collimating left circular polarization light 804 and leaving right circular polarization light 802 unaffected. Thus, in the illustrated embodiment of Figure 12, light beams 607 are left circular polarized when projected from image light projector 602. The left circular polarized light beams 607 are unaffected by the first HOE and collimated by the second HOE 722. However, after passing through the BSU 724 on a first pass away from eye 716 and on a second pass toward eye 716, the light beams 607 may have their polarization switched such that they are right circular polarized at the time of the second pass through the first HOE 720 and the second HOE 722 toward the eye 716. Thus, upon the second pass, light beams 607 may be unaffected by the second HOE 722 and focused to the exit pupil 610 by the first HOE 720.

In some embodiments, the optical functions of the first HOE 720 and second HOE 722 may be interchangeable such that the first HOE 720 performs the above-described optical function of the second HOE 722 and vice versa. In the illustrated embodiment of Figure 12, light beams 607 are initially left circular polarized such that they are unaffected by first HOE 720 and collimated by the second HOE 722. After reflecting from the dichroic mirror 726 and leaving the BSU 724 towards the eye 716, however, the light beams 607 may be right circular polarized such that they pass through the second HOE 722 unaffected and are focused at the exit pupil 610 by the first HOE 720.

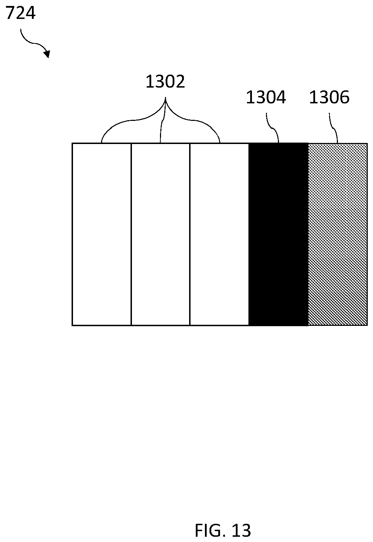

Figure 13 illustrates an example BSU 724 according to some embodiments herein. The BSU 724 may comprise one or more Bragg selective LCPGs 1302. Each of the LCPGs may comprise switchable nematic Bragg selective LCPGs 1302. In the example BSU 724 using Bragg selective LCPGs 1302, all of the one or more Bragg selective LCPGs 1302 are configured to act on light having the same polarization. For example, in some embodiments, each of the one or more Bragg selective LCPGs 1302 may act on light having right circular polarization. In some other embodiments, each of the one or more Bragg selective LCPGs 1302 may act on light having left circular polarization. As a result of this configuration of Bragg selective LCPGs 1302, world light having an opposite polarization to the polarization on which the Bragg selective LCPGs act may pass through the BSU 724 unaffected. Thus, no world compensator may be needed in this configuration.

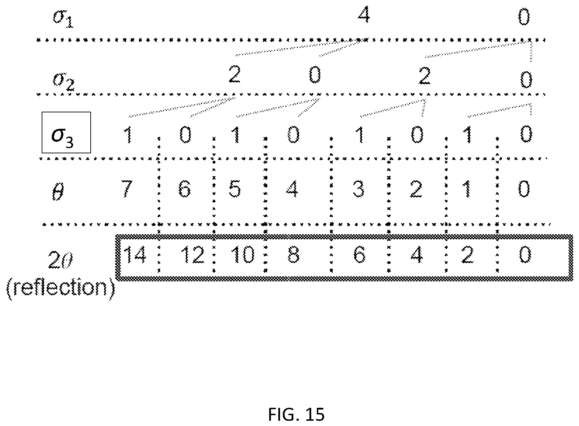

Without being limited by theory, it is believed that if the spatial frequency of grating i + 1 of the Bragg selective LCPGs 1302 is different from the spatial frequency of grating i of the Bragg selective LCPGs 1302, the number of possible diffraction angles θ is equal to 2ⁿ, where n is the number of LCPGs 1302 in the BSU 724. Figure 15 illustrates example diffraction angles θ that may be achieved using a BSU 724 with Bragg selective LCPGs 1302 with n = 3 and where the spatial frequency σᵢ₊₁ = 2σᵢ. As shown, a beam steering unit having n = 3 Bragg selective LCPGs 1302 may achieve 2³ = 8 spaced diffraction angles. In the double pass configuration, the diffraction angles may be doubled to 2θ.

### Mechanically Actuated Pupil Steering Mechanisms

In some embodiments, head-mounted display systems may include diffractive reflectors comprising exit pupil steering mechanisms that are mechanically actuated to provide lateral translation, rotation, and/or tilting of optical elements. In some embodiments, the diffractive reflectors and related image light projector may provide a single exit pupil. The diffractive reflectors may include a plurality of diffractive layers wherein at least one of the layers is mechanically actuated to steer the exit pupil of the display system to the location of the pupil of an eye. In some other embodiments, the diffractive reflector may comprise more than one exit pupil. As discussed herein, the diffractive reflector may be part of an optical combiner, such as for an augmented reality display system.

### Risley Prism-Based Diffractive Reflectors

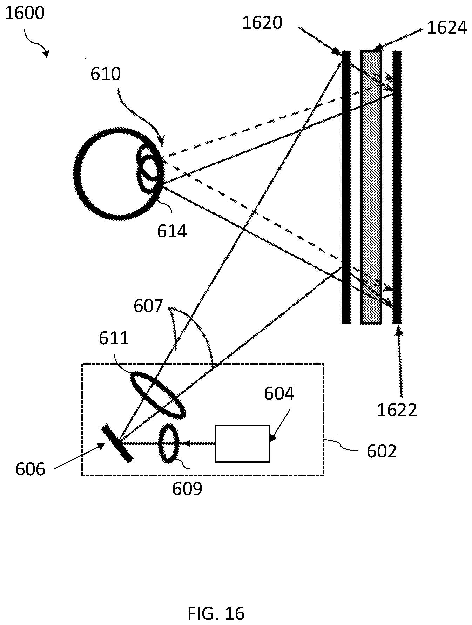

Referring to Figure 16, in some embodiments, a mechanically actuated exit pupil steering mechanism may comprise a Risley prism-based architecture 1600. In some embodiments, a Risley prism-based architecture 1600 may comprise a plurality of diffractive layers, e.g., four diffractive layers, wherein two of the diffractive layers rotate mechanically to shift an exit pupil 612 of a display device. In some embodiments, the Risley prism-based architecture 1600 is structured on the principle of a Risley prism, also called a Risley prism pair, which comprises a pair of wedge prisms that may be used for beam steering. For example, rotating one wedge in relation to the other will change the direction of a light beam. When the wedges angle in the same direction, the angle of the refracted beam becomes greater. When the wedges are rotated to angle in opposite directions, they cancel each other out, and the beam is allowed to pass straight through. It will be appreciated that the diffractive layers function in a similar manner. In some embodiments the optical architecture 1600 may be used to form a diffractive reflector for use in a VRD display, such as a diffractive reflector 608 for the display system of Figure 6

In some embodiments, the Risley prism-based architecture 1600 may comprise four diffractive layers, wherein each of the middle two layers rotate relative to the other, and wherein the two outer layers remain stationary. The Risley prism-based architecture 1600 may comprise reflective or transmissive diffractive layers. In some embodiments, an outer layer 1620 closest to the incident light beams 607 from image light projector 602 may comprise a first HOE. In some embodiments, the active layers (e.g. the two middle layers) of Risley prism-based architecture 1600 may provide the desired optical functionality based on manipulation by an actuator (not shown). In some embodiments, the active layers may act on collimated light from the first HOE 1620. In some embodiments, an outer layer 1622 furthest from the incident light may comprise a second HOE. In some embodiments, the second HOE of the layer 1622 may comprise a focusing lens or focusing plate. In some embodiments, the Risley prism-based architecture may be part of a combiner. In some embodiments, the layers of the Risley prism-based architecture 1600 may be angled relative to each in order to reduce artifacts or other image imperfections in a projected image from image light projector 602.

In some embodiments, the Risley prism-based architecture 1600 comprises a four or more layers of diffractive structures. In some embodiments, the layers may comprise VPHs, liquid crystal based phase gratings, or a combination of both. Different types of gratings may be utilized depending on the optical architecture and device requirements such as eyebox size, resolution, and FOV, among others. Depending on the optical architecture chosen (e.g. single pass, double pass, reflection, transmission), additional layers may be required to compensate for see-through transparency. For example, single pass and double pass architectures may be formed using either transmissive or reflection gratings, or a combination of both.

Referring again to Figure 16, the architecture 1600 may comprise an optical combiner comprising an active, Risley prism BSU 1624, a first diffractive layer 1620, and a second diffractive 1622. The Risley prism-based architecture 1600 may also comprise an image light projector 602 comprising a laser light source 604 directing light to a MEMS 606. The image light projector 602 may comprise one or more additional lasers, MEMS, mirrors, galvanometer scanners, collimators, upstream varifocal or other optical components 609, 611.

In some embodiments, the first HOE 1620 may function as a collimator of light beams 607, such that the light beams 607 from the image light projector 602 are directed to the BSU 1624. The BSU 1624 may, in response to movement of a user's pupil 614, be mechanically actuated to diffract the light beams 607 such that the light beams 607 are steered to exit pupil 610. The BSU 1624 may be formed in a single pass configuration, wherein the light beams 607 are only diffracted when entering the BSU 1624 from the side of the image light projector 602, the first diffractive layer 1620, and the eye, or in a double pass configuration, wherein the light beams 607 are diffracted both on a first pass through the BSU 1624 and upon a second pass through the BSU 1624 after interacting with the second diffractive layer 1622. In some embodiments, the second diffractive layer 1622 may act as a focusing lens to reflect the light beams 607 back to the BSU 1624 and towards the eye of a user. In some embodiments, light beams 607 are not affected by the first diffractive layer 1620 on the second pass, after returning from the BSU 1624 and the second diffractive layer 1622. In some embodiments, optical architecture 1600 may comprise additional layers, such as additional diffractive layer (e.g. additional HOEs) and/or dichroic mirrors, among others.

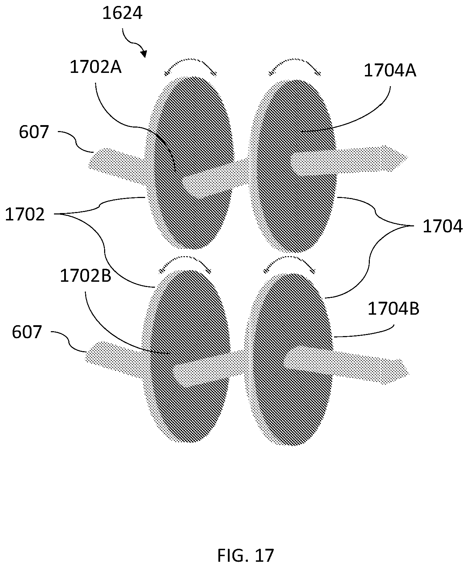

Figure 17 illustrates an example of a structure for the Risley prism-based BSU 1624 of Figure 16. The example BSU 1624 of Figure 17 comprises a transmissive Risley prism based pupil steering mechanism. In the illustrated embodiment, BSU 1624 comprises at least two transmission diffractive gratings in a single pass or double pass configuration, as discussed herein. Light beam 607 incident upon a first transmission grating 1702 and the second transmission grating 1704 may be diffracted upon transmission through each of the gratings. In some embodiments, the angle of diffraction may be changed by rotation of the first transmission grating 1702 and/or the second transmission grating 1704. For example, as illustrated, mechanical rotation of first grating 1702 from a first orientation 1702A to a second orientation 1702B may change the diffraction angle of light beam 607 upon transmission through the first grating 702. Similarly, mechanical rotation of second grating 1704 from a first orientation 1704A to a second orientation 1704B may change the diffraction angle of light beam 607 upon transmission through the second grating 704. As a result of the change in diffraction angles caused by rotation of the first transmission grating 1702 and/or the second transmission grating 1704, the location of an exit pupil 610 may be steered in at least two dimensions. In some embodiments, the rotational plane of first transmission grating 1702 and/or the second transmission grating 1704 is oriented perpendicular to the direction of light propagation through the first grating 1702 and the second grating 1704. In a single pass configuration, light beam 607 will only be diffracted once by BSU 1624, while in a double pass configuration, light beam 607 may diffracted on both the first and second pass through BSU 1624.

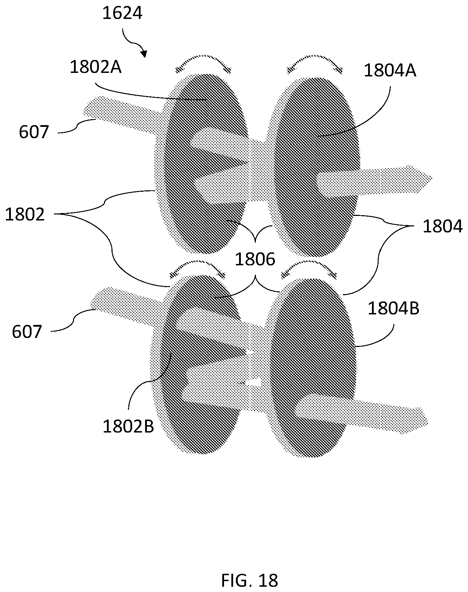

Figure 18 illustrates another example of a structure for the Risley prism-based BSU of Figure 16. BSU 1624 of Figure 18 comprises a reflective Risley prism-based pupil steering mechanism. In the illustrated embodiments, BSU 1624 comprises at least two reflection gratings in a single pass or double pass configuration, as discussed herein. Light beams 607 incident upon the first reflective grating 1802 and/or the second reflective grating 1804 may be diffracted upon reflection from an interior side or surface 1806 of each the gratings. In some embodiments, the interior side 1806 of the gratings refers to the sides of the first reflective grating 1802 and the second reflective grating that face each other. In some embodiments, the angle of diffraction of light beams 607 may be changed by rotation of the first reflection grating 1802 and/or the second transmission grating 1804. For example, as illustrated, mechanical rotation of first grating 1802 from a first orientation 1802A to a second orientation 1802B may change the diffraction angle of light beam 607 upon reflection from the interior side 1806 of the first grating 1802. Similarly, mechanical rotation of second grating 1804 from a first orientation 1804A to a second orientation 1804B may change the diffraction angle of light beam 607 upon reflection from the interior side 1806 of the second grating 1804. As a result of the change in diffraction angles caused by rotation of the first reflection grating 1802 and/or the second reflection grating 1804, the location of an exit pupil 610 may be steered in at least two dimensions. In some embodiments, the rotational plane is oriented perpendicular to the direction of light propagation through the first grating 1802 and the second grating 1804.

The net optical function of a Risley prism BSU formed with transmissive gratings and a Risley prism BSU formed by reflective gratings may be similar depending on the orientation of the gratings. However, in a reflective grating BSU, light may not be diffracted upon transmission of the light through each grating, but rather upon reflection from opposite facing surfaces of adjacent gratings, as shown in Figure 18.

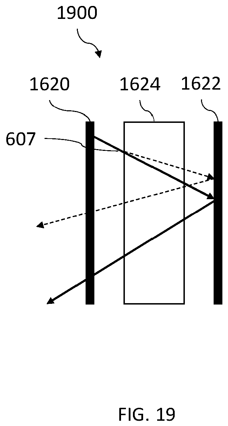

Figure 19 illustrates an example of the optical functionality of a single pass Risley prism-based BSU 1624. Combiner 1900 may comprise a first HOE 1604 and second HOE 1606, as discussed in relation to optical architecture 1600 of Figure 16. Furthermore, combiner 1900 may comprise a single pass configuration Risley prism BSU 1624. As illustrated, light beam 607 may be diffracted once upon initial transmission through BSU 1624 from the first HOE 1620. However, light 607 may not be affected by BSU 1624 upon a second transmission through BSU 1624 from the opposite side, returning from the second HOE 1622. It will be appreciated that the diffraction of light beams 607 is shown in Figure 19 as a net diffraction. As discussed in relation to Figures 17 and 18, light beam 607 may be diffracted multiple times within BSU 1624 and may be diffracted upon transmission through or reflection from one or more layers of diffractive gratings within BSU 1624.

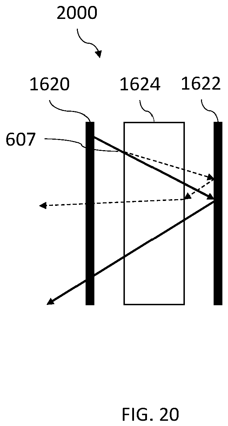

Figure 20 illustrates an example of the optical functionality of a double pass Risley prism-based BSU 1624. Diffractive reflector 2000 may comprise first diffracted layer 1620 and second diffracted layer 1622, as discussed in relation to optical architecture 1600 of Figure 16. As discussed herein, each of the diffractive layers 1620, 1622 may comprise HOE's. In some embodiments, the diffractive reflector 2000 may comprise a double pass configuration Risley prism BSU 1624. As illustrated, light beam 607 may be diffracted once upon initial transmission through BSU 1624 from the first diffractive layer 1620 and again upon a second transmission through BSU 1624 from the opposite side, returning from the second diffractive layer 1624.

Both transmissive and reflective-type Risley Prism BSUs may be orientated in a single pass or double pass configuration, depending on the optical requirements of the specific display device. As discussed in relation to Figures 17 and 18, light beam 607 may be diffracted multiple times within BSU 1624 and may be diffracted upon transmission through or reflection from one or more diffractive gratings within BSU 1624.

### Shifting Plate-Based Actuation

In some embodiments, diffractive reflectors may comprise exit pupil steering mechanisms comprising a shifting plate-based BSU. In some embodiments, a shifting plate-based BSU may comprise two or more diffractive layers, wherein a lateral shift of one or more of the diffractive layers results in shifting of an exit pupil 610 (Figure 6) of a display system.

In some embodiments, a shifting plate-based BSU may function by laterally displacing, in the X and/or Y direction on a plane transverse to the line of sight of the user, one or more optical elements (e.g., diffractive layers) of a diffractive reflector. It will be appreciated that the X and Y directions may also be understood to refer to the directions parallel to horizontal and vertical axes in the FOV of a user (such as directions along the horizontal and vertical axes of the user's visual field). In some embodiments, shifting plate-based BSUs may require two or more layers, wherein one or more of the layers moves relative to the other layer(s). The layers may comprise VPHs or reflective geometric phase lenses, or a combination of both. In some embodiments, no additional layers are required for world light compensation.

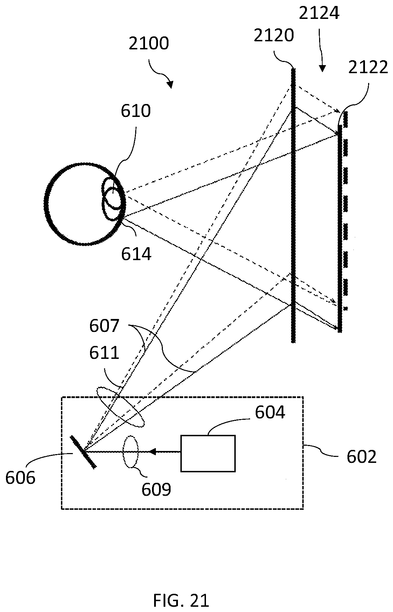

Figure 21 illustrates an example optical architecture 2100 comprising a collimated shifting plate combiner. The architecture 2100 may comprise an optical combiner comprising a BSU 2124 comprising a first grating layer 2120 and a second grating layer 2122. The optical architecture 2100 may also comprise an image light projector 602 comprising a light source 604 (e.g., a laser light source) directing light to a MEMS 606 for scanning the light over an entire, digitally windowed pupil steering range. It will be appreciated that the image light projector 602 may comprise one or more additional light sources (e.g. lasers), MEMS, mirrors, galvanometer scanners, collimators, upstream varifocal or other optical components 609, 611. In some embodiments the optical architecture 2100 may be used to form a diffractive reflector for use in a VRD display, such as a diffractive reflector 608 for the display system of Figure 6.

In some embodiments, the first grating layer 2120 comprises a first HOE, which functions by collimating all chief rays of light beams 607 at a steep angle to avoid crosstalk between the first grating layer 2120 and the second grating layer 2122. As used herein, crosstalk refers to interference or crossing of optical signals between the gratings. Collimating all chief rays before focusing them ensures that the second grating layer 2122 is insensitive to position variation such that all incident light beams 607 on the second grating layer 2122 will be Bragg matched and, therefore, form a focused, small exit pupil 610 with high efficiency. In some embodiments, the second grating layer 2122 comprises a second HOE, which functions to focus the collimated chief rays to the exit pupil 610. In some embodiments, mechanical translation of the second grating layer 2122 in the X and Y directions is used to steer light beams 607 to the exit pupil 610 based on a detected location of a user's eye. In some embodiments, mechanical translation of the second grating layer 2122 in the X and Y directions moves the exit pupil 610 with a 1:1 relationship. In other words, the exit pupil 610 moves an equal distance in the X and Y direction as the corresponding movement in the X and Y directions of the second grating layer 2122. In some embodiments, the first grating layer 2120 may comprise a transmissive HOE such that diffraction of light beams 607 occurs upon transmission of the light beams 607 through the first grating layer 2120. In some embodiments, the second grating layer 2122 may comprise a reflective HOE such that diffraction of light beams 607 occurs upon reflection of the light beams 607 from the second grating layer 2120.

In some embodiments, in the collimated shifting plate arrangement, the exit pupil 610 displacement is proportional to the displacement of the second grating 2122 at a ratio of 1:1. As a result of its simple structure, the collimated shifting plate arrangement may be used to form highly efficient and simple display systems. In some embodiments, when using three color projection (RGB), the collimated shifting plate pupil steering may result in total power efficiency of over 90%. Furthermore, as discussed herein, the collimated shifting plate arrangement may avoid optical crosstalk, which reduces artifacting and increases overall visual quality of optical systems. Finally, in some embodiments, the collimated shifting plate arrangement may minimize or eliminate pupil aberrations, which could otherwise deteriorate user experience.

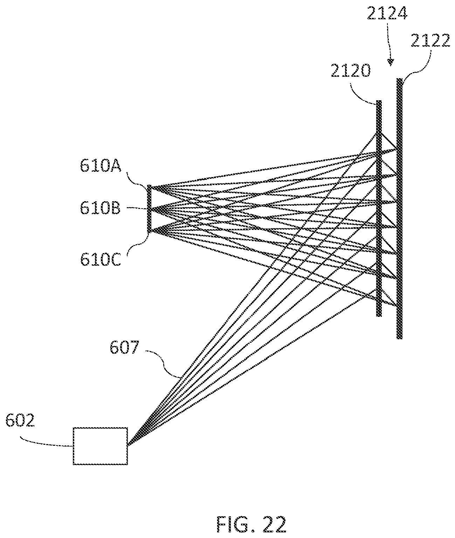

Figure 22 illustrates various pupil steering positions that may be achieved using a collimated shifting plate diffractive reflector, such as that illustrated in Figure 21. In some embodiments, a combiner comprising a collimated shifting plate beam steering mechanism may be capable of steering an exit pupil over about an 8 mm x 8mm area in the X and Y directions. However, the steering range may be extended or limited based on the actuation range of the shifting plate. Figure 22 illustrates chief rays of light beams 607 from image light projector 602 being steered by a BSU 2124 comprising first grating 2120 and a second movable grating 2122 to three different exemplary Y-axis exit pupil positions 610A, 610B, and 610C.

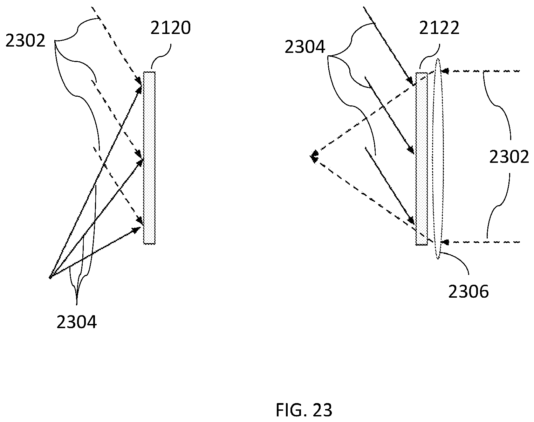

Figure 23 illustrates examples of volume phase holographic grating structures for the shifting plate BSU of Figure 21. The volume phase holographic grating structures may form a collimated shifting plate diffractive reflector. In some embodiments, the first grating layer 2120 may comprise a transmission VPH. In some embodiments, as illustrated in Figure 23, a light beam 607 may be split by, for example, a beam splitter, into two beams, one known as the object beam 2302 and the other as the reference beam 2304. A transmission VPH is a VPH where the object beams 2302 and reference beams 2304 are incident on the VPH from the same side, as illustrated in Figure 23 on first grating layer 2120. In some embodiments, the second grating layer 2122 may comprise a reflection VPH. In the reflection VPH the object beams 2302 and reference beams 2304 may be incident on the VPH from opposite sides, as illustrated in Figure 23 on second grating 2122. In some embodiments, the first grating 2120 and/or the second grating 2122 are provided with additional optical elements, such as focusing lens 2306 to provide desired optical functions.

### Powered Shifting Plate-Based Actuation

In some embodiments, diffractive reflectors may comprise exit pupil steering mechanisms comprising a powered shifting plate-based BSU. In some embodiments, a powered shifting plate-based BSU may comprise two or more diffractive layers, wherein a lateral shift of one or more of the diffractive layers results in shifting of an exit pupil 610 (Figure 6) of a display device.

In some embodiments, a powered shifting plate BSU may comprise at least two transmissive refractive plates or gratings in a modified Alvarez lens arrangement. In a traditional Alvarez lens, each grating has a flat surface and an opposite surface shaped in a two-dimensional cubic profile. The cubic surfaces of adjacent gratings are inversely shaped to each other, such that when both gratings are provided with their vertices on the optical axis, the induced phase variations of each grating are canceled by the adjacent grating. However, if the two plates undergo a relative lateral translation, a phase variation is introduced that is the differential of the cubic surface profiles, resulting in a quadratic phase profile (e.g. optical power). Thus, relative translations in the X or Y direction induce cylindrical power independently in orthogonal directions, whereas combined movements may produce circular, elliptical, or cylindrical phase profiles.

In some embodiments, a powered shifting plate-based BSU may comprise a variation of the standard Alvarez lens. For example, the BSU may comprise two or more diffractive lenses, each having a quadratic phase. When adjacent gratings are translated or shifted in the X or Y direction relative to each other, the gratings produce a linear grating function. This function may be used to effect beam steering in two dimensions. In some embodiments, in contrast to collimated shifting plate architectures, the powered shifting plate BSU does not collimate beams between the adjacent gratings. However, powered shifting plate BSUs may change the wavefront divergence of light beams 607 (Figure 6).

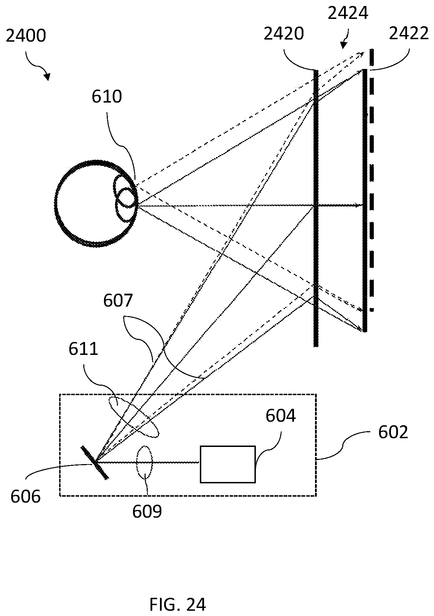

Figure 24 illustrates an example optical architecture comprising a powered shifting plate combiner. The architecture 2400 may comprise a diffractive reflector, which may be part of an optical combiner, comprising a BSU 2424 comprising a first grating layer 2420 and a second grating layer 2422. The optical architecture 2400 may also comprise an image light projector 602 comprising a light source 604 (e.g., a laser light source) configured to direct image light to a MEMS 606, which is arranged to reflect the image light to different BSU 2424. In some embodiments, the MEMS 606 is movable and may be configured to, e.g., rotate to scan the light over an entire, digitally windowed pupil steering range. The image light projector 602 may comprise one or more additional lasers, MEMS, mirrors, galvanometer scanners, collimators, upstream varifocal, beam splitters or other optical components 609, 611. In some embodiments, the light beams 607 from image light projector 602 are Bragg matched to light rays emanating from a center of a pupil of the image light projector 607. In some embodiments the optical architecture 2400 may be used to form a diffractive reflector for use in a VRD display, such as a diffractive reflector 608 for the display system of Figure 6

In some embodiments, the first quadratic phase grating 2420 may be stationary and diverge all chief rays of light beams 607 having a particular focal length F, the chosen focal length F depending on the desired optical properties of the diffractive reflector. Diverging all chief rays of focal length F before focusing them may mitigate crosstalk and the second quadratic phase grating 2422 may be insensitive to position variation such that all incident light beams 607 on the second quadratic phase grating 2422 will be Bragg matched and, therefore, form a focused, small exit pupil 610 with high efficiency. In some embodiments, the second quadratic phase grating 2422 focuses the diverged chief rays to the exit pupil 610. In some embodiments, mechanical translation of the second quadratic phase grating 2422 in the X and Y directions is used to steer light beams 607 to the exit pupil 610 based on a detected location of a user's eye. In some embodiments, mechanical translation of the second quadratic phase grating 2422 in the X and Y directions moves the exit pupil 610 with a 1:1 or a 1:>1 relationship. For example, the exit pupil 610 may move an equal or a larger distance in the X and Y direction as the corresponding movement in the X and Y direction of the second quadratic phase grating 2422. In some embodiments, the first quadratic phase grating 2420 may comprise a transmissive VPH such that diffraction of light beams 607 occurs upon transmission of the light beams 607 through the first quadratic phase grating 2420. In some embodiments, the second grating 2422 may comprise a reflective VPH such that diffraction of light beams 607 occurs upon reflection of the light beams 607 from the second quadratic phase grating 2422.

In some embodiments, in the powered shifting plate arrangement, the exit pupil 610 displacement is proportional to the displacement of the second quadratic phase grating 2422 at a ratio of 1:1 or >1:1. In some embodiments, the ratio of the movement of exit pupil 610 to the movement of second quadratic phase grating 2422 may be about 1.00:1, about 1.05:1, about 1.10:1, about, 1.15:1, about 1.20:1, about 1.25:1, about 1.30:1, about 1.35:1, about 1.40:1, about 1.45:1, about 1.50:1, about 1.55:1, about 1.60:1, about 1.65:1, about 1.70:1, about 1.75:1, about 1.80:1, about 1.85:1, about 1.90:1, about 1.95:1, about 2.00:1, about 2.05:1, about 2.10:1, about 2.15:1, about 2.20:1, about 2.25:1, about 2.30:1, about 2.35:1, about 2.40:1, about 2.45:1, about 2.50:1, about 2.55:1, about 2.60:1, about 2.65:1, about 2.70:1, about 2.75:1, about 2.80:1, about 2.85:1, about 2.90:1, about 2.95:1, about 3.00:1, or a value between any of the aforementioned values.

Compared to a collimated shifting plate BSU, a powered shifting plate BSU may be advantageous due to a ratio of >1:1 of the movement of exit pupil 610 to the movement of second quadratic phase grating 2422. As a result, relatively small movements of the second quadratic phase grating 2422 may induce movement of the exit pupil 610 a certain distance, wherein the same distance movement of the exit pupil 610 in the collimated shifting plate BSU would require a larger movement of the second grating 2144. Furthermore, as discussed herein, the powered shifting plate arrangement may advantageously mitigate optical crosstalk, which reduces artifacting and increases overall visual quality of optical systems. The incidence of pupil aberrations may also be reduced or eliminated with a powered shifting plate BSU. However, the powered shifting plate BSU has a more complex structure than the collimated shifting plate BSU and generally has a lower efficiency of around 60% when using three color projection (RGB).

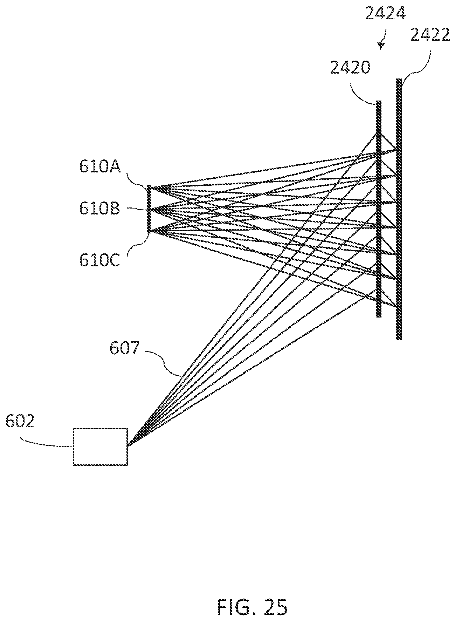

Figure 25 illustrates various examples of pupil steering positions that may be achieved using a powered shifting plate combiner, such as that illustrated in Figure 24. In some embodiments, a combiner comprising a powered shifting plate beam steering mechanism may be capable of steering an exit pupil over about an 8 mm x 8mm area in the X and Y directions. However, the steering range may be extended or constrained based on the actuation range of the shifting plate. Figure 25 illustrates chief rays of light beams 607 from image light projector 602 being steered by a BSU 2424 comprising first grating 2420 and a second movable grating 2422 to three different exemplary Y-axis exit pupil positions 610A, 610B, and 610C.

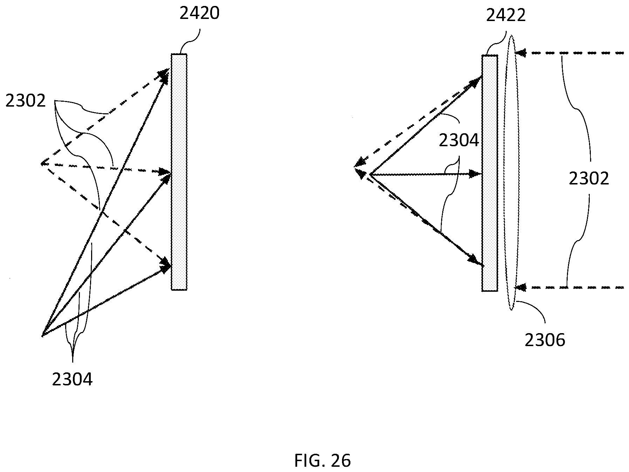

Figure 26 illustrates example volume phase holographic grating structures for the shifting plate BSU of Figure 24. In some embodiments, as illustrated in Figure 23, a light beam 607 may split by, for example, a beam splitter, into an object beam 2302 and a reference beam 2304. In some embodiments, the first grating layer 2420 may comprise a transmission VPH. In some embodiments, the second grating layer 2422 may comprise a reflection VPH. In some embodiments, the first grating layer 2420 and/or the second grating layer 2422 are provided with additional optical elements, such as focusing lens 2306 to provide desired optical functions. As illustrated in Figure 26, a small off-axis offset in the focus of the two object beams is necessary to avoid crosstalk on the second pass interaction with the first grating layer 2420 after reflective diffraction from the second grating layer 2422.

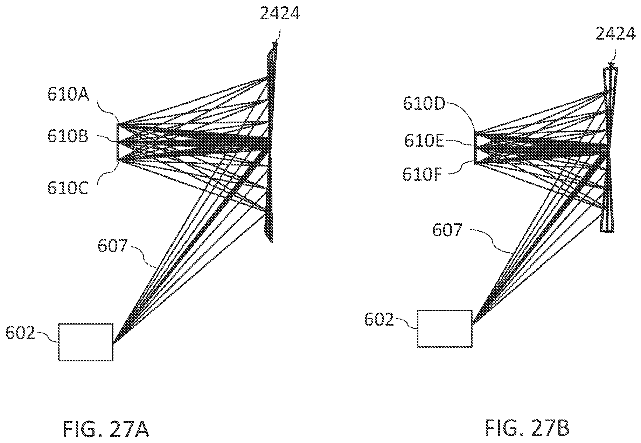

As an alternative to powered shifting plates in which the second grating layer 2422 may only be shifted laterally to steer an exit pupil 610, Figures 27A and 27B illustrate various exemplary pupil steering positions that may be achieved using a tilt and shift powered shifting plate combiner according to some embodiments herein. A tilt and shift powered shifting plate architecture may have an identical architecture to the optical architecture 2400 of Figure 24. However, in a tilt and shift powered shifting plate BSU, the second quadratic phase grating layer 2422 may be actuated to both shift laterally and tilt toward or away from the eye of a user or viewer. In some embodiments, while a lateral shift refers to a movement of a grating layer in the X and Y dimensions of the FOV, a tilt refers to movement of the grating in the optical Z-axis, wherein a portion of the grating tilts toward the user or viewer and another portion of the grating tilts away from the user of viewer.

Figures 27A illustrates pupil steering positions of a tilt and shift powered shifting plate BSU 2424. In some embodiments, the second quadratic phase grating layer 2422 has a lateral shifting range in the X direction of about 1.0 mm, or about 0.5 mm in the left direction and about 0.5 mm in the right direction, and a tilt shifting range of 4 degrees, or about 2 degrees away from the viewer and about 2 degrees toward the viewer. Figures 27B illustrates pupil steering positions of a tilt and shift powered shifting plate BSU 2424, wherein the second quadratic phase grating layer 2422 has a tilt shifting range of 6 degrees, or about 3 degrees away from the viewer and about 3 degrees toward the viewer.

In some embodiments, a diffractive reflector comprising a tilt and shift powered shifting plate beam steering mechanism may be capable of steering an exit pupil over about an 8 mm x 8mm area in the X and Y directions. However, the steering range may be extended or reduced based on the shifting and tilting actuation ranges of the shifting plate. Figures 27A and 27B illustrate chief rays of light beams 607 from image light projector 602 being steered by a BSU 2424 comprising first grating layer 2420 and a second movable grating layer 2422 to different exemplary Y-axis exit pupil positions 610A, 610B, 610C, 610D, 610E, and 610F.

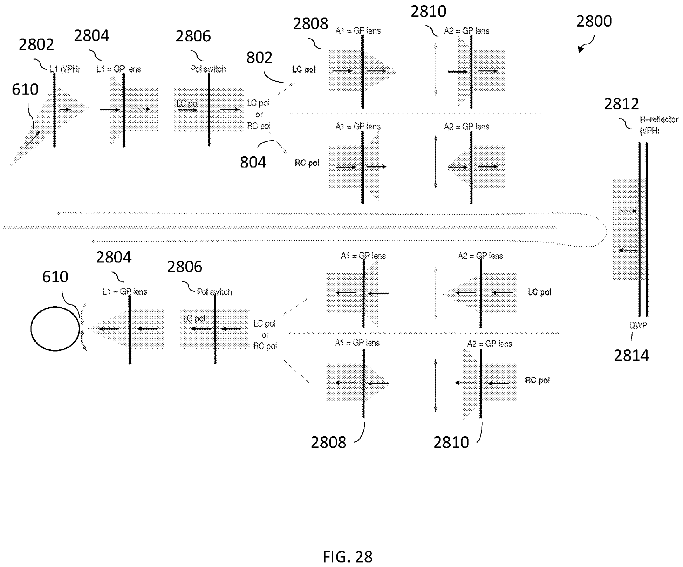

While the example powered shifting plate architecture 2400 of Figure 24 and the tilt and shift powered shifting plate architecture of Figures 27A and 27B utilize two diffractive grating layers to steer exit pupil 610, more complex configurations of diffractive elements may be utilized to reduce the frequency and/or distance of mechanical translation for a desired exit pupil translation. An example configuration is illustrated in Figure 28, which demonstrates an optical structure of a double pass powered shifting plate combiner. The double pass powered shifting plate combiner may provide an optical architecture with low RGB crosstalk, low pupil aberrations, and an advantageous exit pupil steering to mechanical translation ratio.

Referring to Figure 28, an example is illustrated of an optical architecture 2800 for a double pass powered shifting plate BSU, showing examples of the propagation of light through the optical structure. The architecture 2800 may act on projected light beams 607 from, for example, an image light projector 602 (Figure 6), which may comprise a laser light source 604 directing light to a MEMS 606. The image light projector 602 may comprise one or more additional light sources (e.g. lasers), MEMS, mirrors, galvanometer scanners, collimators, upstream varifocal or other optical components 609, 611. In some embodiments, light beams 607 may comprise left circular polarized light 802.

The architecture 2800 may comprise a first VPH layer 2802 and a first polarization lens layer 2804, which function in combination to collimate light beams 607 toward a polarization switch 2806. The polarization switch 2806 functions by selectively converting light beams 607 into light with the letter polarization, or simply transmitting light without changing polarization. For example, the polarization switch 2806 may simply transmit light having a left circular polarization 802 or convert the light into its light with a right circular polarization 804. Left circular polarization light 802 or right circular polarization light 804 are then directed from the polarization switch 2806 to a second polarization lens 2808 and a third polarization lens 2810. In some embodiments, the second polarization lens 2808 has an optical function of focusing collimated left circular polarization light 802 or diverging collimated right circular polarization light 804.

Light from the second polarization lens 2808 is directed to the third polarization lens 2810, which is configured to mechanically shift and/or tilt relative to the second polarization lens 2808 to dynamically steer light to an exit pupil 610. Third polarization lens 2810 may be shifted and/or tilted using any of the mechanical steering mechanisms described herein, but preferably, is shifted and/or tilted using the powered shifting plate approach. Light from the third polarization lens 2810 is directed to wave plate 2814, which may comprise a quarter wave plate, and a reflector 2812, which may reflect the light back through the optical architecture 2800.

On the second pass through polarization switch 2806, the light is switched to left circular polarization light 802 and directed to the first polarization lens 2804. The first polarization lens 2804 focuses the light beams 607 to the steered exit pupil 610 of the eye. Each of the first polarization lens 2804, the second polarization lens 2808, and the third polarization lens 2810 may comprise a HOE, in some embodiments.

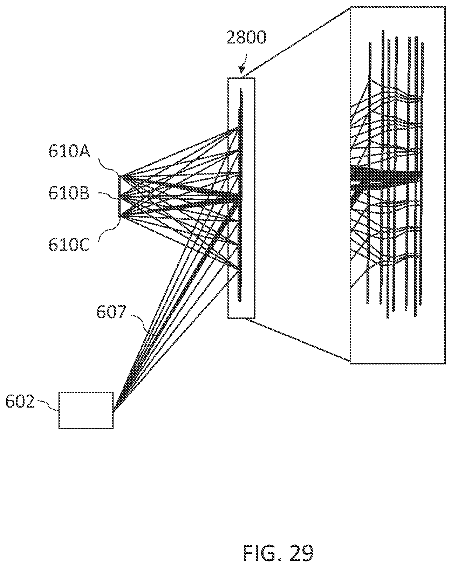

Figure 29 illustrates various pupil steering positions of a double pass powered shifting plate combiner according to some embodiments herein. Figure 29 illustrates chief rays of light beams 607 from image light projector 602 being steered by the optical architecture 2800 to three different exemplary Y-axis exit pupil positions 610A, 610B, 610C.

The illustrated embodiment of Figure 29 may be capable of inducing an exit pupil shifting range of about 8 mm in the X direction, or around 4 mm in the left direction and about 4 mm in the right direction, using a mechanical translation range of only about 0.50 mm. Thus, a double pass powered shifting plate combiner may have a ratio of exit pupil movement to mechanical grating movement of about 16:1. In some embodiments, the double pass powered shifting plate combiner may have a ratio of exit pupil movement to mechanical grating movement of about 1:1, about 2:1, about 3:1, about 4:1, about 5:1, about 6:1, about 7:1, about 8:1, about 9:1, about 10:1, about 11:1, about 12:1, about 13:1, about 14:1, about 15:1, about 16:1, about 17:1, about 18:1, about 19:1, about 20:1, about 21:1, about 22:1, about 23:1, about 24:1, about 25:1, about 26:1, about 27:1, about 28:1, about 29:1, about 30:1, about 31:1, about 32:1, about 33:1, about 34:1, about 35:1, about 36:1, about 37:1, about 38:1, about 39:1, about 40:1, about 41:1, about 42:1, about 43:1, about 44:1, about 45:1, about 46:1, about 47:1, about 48:1, about 49:1, about 50:1, or between any of the aforementioned values.

### Software Integration

As discussed herein with reference to Figure 2, the optical architectures discussed herein may be integrated within an optical combiner as part of a display system 62. The display system 62 may comprise a hardware processor, as well as digital memory, such as non-volatile memory (e.g., flash memory or hard disk drives), both of which may be utilized to assist in the processing, caching, and storage of data. The data include data a) captured from sensors (which may be, e.g., operatively coupled to the frame 64 or otherwise attached to the user 60), such as image capture devices (such as cameras), microphones, inertial measurement units, accelerometers, compasses, GPS units, radio devices, gyros, and/or other sensors disclosed herein; and/or b) acquired and/or processed using remote processing module 72 and/or remote data repository 74 (including data relating to virtual content), possibly for passage to the display 62 after such processing or retrieval. The local processing and data module 70 may be operatively coupled by communication links 76, 78, such as via a wired or wireless communication links, to the remote processing module 72 and remote data repository 74 such that these remote modules 72, 74 are operatively coupled to each other and available as resources to the local processing and data module 70.

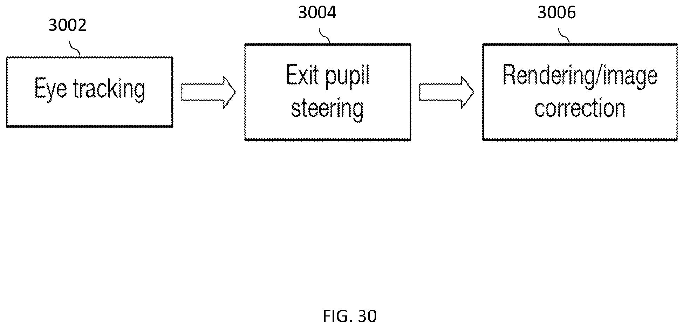

Figure 30 illustrates a flowchart of an exemplary high-level process for generating an image on a steered exit pupil in a display device according to some embodiments herein. At 3002, one or both eyes of a user may be tracked by, for example, the video-based eye tracking systems of the camera assembly 82 (Figure 60 to generate eye tracking data. The eye tracking data may be sent to processing modules 70 or 72, which may process image information acquired by the inward-facing imaging system to determine, e.g., the pupil diameters or orientations of the eyes, eye movements or eye pose of the user 60. In some embodiments, processing modules 70 or 72 may comprise a controller of, for example, a pupil steering actuation mechanism and an image light projector, as discussed herein, to perform exit pupil steering at 3004, in order to steer the exit pupil according to the eye tracking data. Finally, the controller may perform rendering and/or image correction at 3006 according to the location of the steered exit pupil to provide an image to the eye of a user. For example, exit pupil shifting may induce changes in the angular content of a projected image. Therefore, in some embodiments, it may be required to perform a geometric warp and shift of the image such that it is adjusted along with the pupil steering.

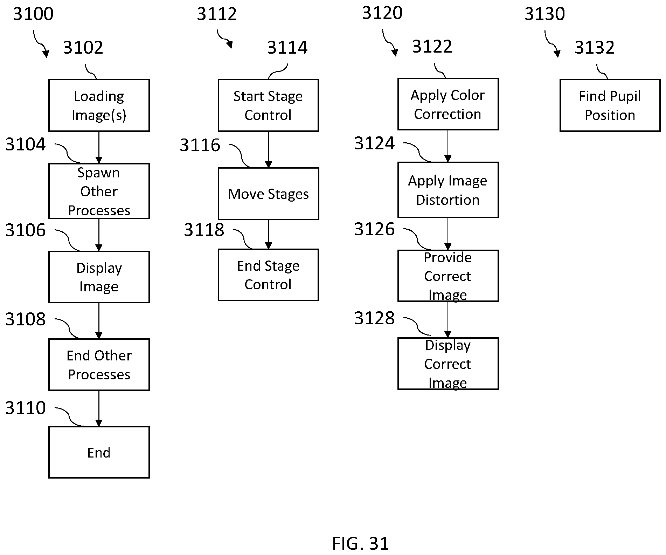

In some embodiments, the display system 62 may comprise one or more controllers (e.g., in processing modules 70 or 72) for monitoring, initiating, and completing multiple processes in parallel to quickly and precisely deliver an image to a steered exit pupil. Figure 31 illustrates a flowchart of example workflow processes for generating an image on a steered exit pupil in a display device according to some embodiments herein. In some embodiments, the one or more controllers may be configured to control a master process 3100, which manages the various other processes and the overall functionality of the display device 62. In some embodiments, the master process 3100 may comprise loading an image or multiple images at 3102, from, for example, data module 70 or remote data depository 74. The master process 3100 may also spawn various other processes at 3104, including, for example, a motor process 3112 to provide mechanical or electronic actuation for pupil steering, a projection process 3120 for projecting images and providing image correction, and/or an eye tracking process 3130 for tracking the eye of the user or viewer 60. The master process 3100 may also comprise displaying images at 3106 and/or ending or terminating other processes at 3108. The master process may end or terminate at 3110.

The motor process 3112 may control various mechanisms within display device 62 including, for example, a MEMS, mechanical actuators, and/or electrical circuits for providing correct image projection and pupil steering functionality. In some embodiments, the motor process may comprise activating a mechanical actuator to move one or more stages within the display device 62 to provide movement of diffractive layers of a diffractive reflector. For example, the motor process 3112 may comprise initiating a stage control mechanism at 3114 based on received eye tracking data and/or instructions from the master process 3100. At 3116, the motor process may move the one or more stages to a desired position to enable correct exit pupil steering. Finally, at 3118, the motor process 3112 may complete stage control, for example, if the stage has been shifted to direct an image to an exit pupil matching the location of the eye of a user 60.

Independently or in parallel with the motor process 3112, a projection process 3120 may comprise correcting and projecting images based on eye tracking data and/or instructions received from master process 3100. For example, projection process 3120 may comprise applying color correction to images at 3122. In optical see-through displays, light coming from background objects mixes with the light originating from the display, causing what is known as the color blending problem. Color blending negatively affects the usability of such displays as it impacts the legibility and color encodings of digital content. Thus, color correction may be desirable for head-mounted display systems, as color blending affects the usability of such devices, especially when used outdoors. Color correction aims at reducing the impact of color blending by finding an alternative display color which, once mixed with the background, results in the color originally intended. Another potential issue in augmented reality display systems is image distortion, which may occur depending on the specific display architecture incorporated into the display. Thus, in some embodiments, at 3124, the projection process 3120 may comprise applying image distortion, which may counteract or nullify the image distortion caused by the optical architecture of display device 62. In some embodiments, after providing color correction and image distortion, a correct image or images may be provided or projected at 3126. Finally, at 3128, the correct image or images may be displayed to a user at 3128.

As discussed herein, small exit pupil head-mounted displays may require accurate and fast pupil tracking such that the exit pupil may be steered to the precise position of a user's pupil. Thus, independently or in parallel with the motor process 3112 and projection process 3120, an eye tracking process 3130 may comprise, at 3132 locating a pupil position of user or viewer 60. Pupil position may be located by, for example, an inward-facing imaging system comprising camera assembly 82 (Figure 6).

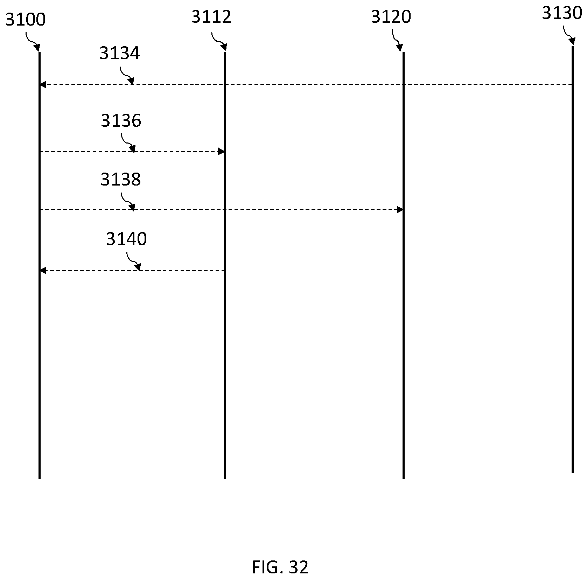

Figure 32 illustrates a diagram of example parallel workflow processes and their connections for generating an image on a steered exit pupil in a display system according to some embodiments herein. In some embodiments, data and/or instructions may be transferred between the various processes to enable correct image generation and projection, eye tracking, and pupil steering. For example, master process 3100 may spawn motor process 3112, projection process 3120, and/or eye tracking process 3130. As described above, eye tracking process 3130 may comprise locating the pupil of an eye of user or viewer 60. As illustrated in Figure 32, data comprising the determined location of the pupil may be transmitted to the master process at 3134. In response to receiving the pupil position, at 3136, the master process may spawn a motor process 3112 and/or issue instructions to motor process 3112, the instructions comprising velocity, positioning, and/or electrical actuation specifications for initiating and completing actuation of beam steering mechanisms of display device 62. In some embodiments, simultaneously or sequentially with issuing instructions to motor process 3112 at 3136, master process 3100 may also spawn projection process 3120 and/or transmit data and instructions to facilitate projection process 3120 at 3138, the instructions comprising a predicted position of a steered exit pupil. In some embodiments, in response to receiving the instructions, the projection process 3120 may apply color correction and image distortion based on the predicted exit pupil position to provide a correct image for display to user or viewer 60 within display device 62.

In some embodiments, once motor process 3112 has completed actuation of beam steering mechanisms of display device 62, data comprising the actual steered position of the exit pupil may be transmitted to master process 3100 at 3140. This data may be transmitted to the projection process 3120 such that further color correction and image distortion may be applied based on the actual position of the exit pupil. It will be understood by the skilled artisan that the above processes and connections are examples, and that the processes described herein may be controlled via one or more processing modules 70 or 72.

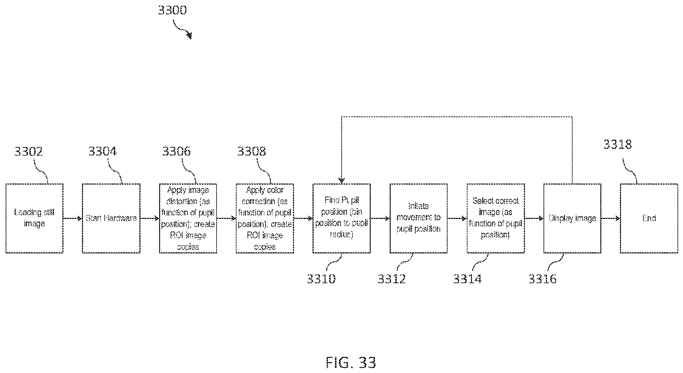

Figure 33 illustrates an example of a flowchart for a process for displaying an image for a steered exit pupil. In particular, Figure 33 illustrates a steered exit pupil image display process 3300 in which an image is pre-calibrated prior to displaying the image. In some embodiments, at 3302, a still image may be loaded, for example, from a local processing and data module 70 or remote data depository 74. In some embodiments, at 3304, hardware, such as, for example, camera assembly 82 (Figure 6), MEMS, mechanical actuators, an image light projector, and/or electrical circuits may be activated. In some embodiments, at 3306, image distortion may be applied. In some embodiments, image distortion may be applied as a function of pupil position. Additionally, in some embodiments, region of interest (ROI) image copies may be created and stored for various pupil positions after image distortion is applied. In some embodiments, at 3308, color correction may be applied. In some embodiments, color correction may be applied as a function of pupil position. Additionally, in some embodiments, ROI image copies may be created and stored for various pupil positions after color correction is applied.

In some embodiments, at 3310, the pupil position of user or viewer 60 may be determined. By way of example, camera assembly 82 (Figure 6) may be configured to obtain images of a user or viewer's eye and transmit the images to one or more processing modules 70 or 72, which may determine a pupil position based on the images. In some embodiments, the bin position to pupil radius may be determined. In some embodiments, at 3312, once the pupil position has been determined, a pupil steering mechanism may be actuated to move the exit pupil to the determined pupil position of user or viewer 60. In some embodiments, one or more gratings of a beam steering unit may be mechanically translated in two dimensions to move the pupil position, as described in detail above. In some embodiments, at 3314, a correct image may be selected from the stored ROI image copies based on the pupil position of user or viewer 60. Finally, at 3316, the image may be projected and displayed to user or viewer 60 at the steered exit pupil. The process may be ended at 3318.

The above described process may require image distortion, color correction, and mechanical translation of beam steering components to be determined as a function of pupil position. In some embodiments, the above process may enable a simpler, faster display loop, wherein display loop refers to a pupil tracking, exit pupil steering, and image display loop. However, in some embodiments, the above process may require a large storage of calibrated ROI images copies from which a correct image may be selected based on pupil position. Although the illustrated embodiment describes loading of a single still image, it will be appreciated that a sequence of still images or moving images may also be calibrated and displayed, although the amount of stored images would be increases linearly with the number of images for display.

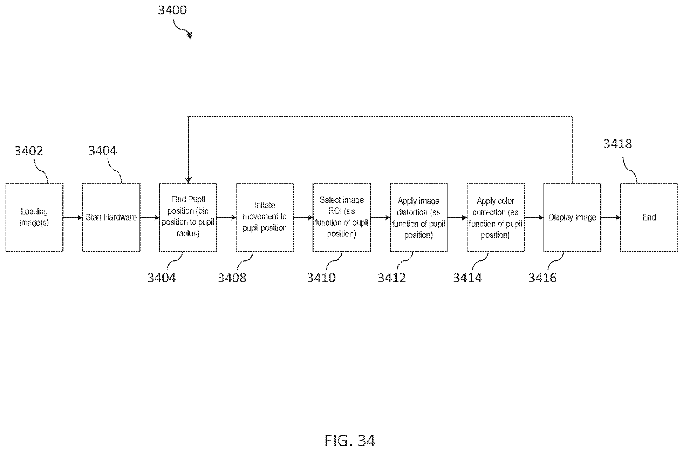

Figure 34 illustrates a flowchart for another example process of displaying an image on a steered exit pupil according to some embodiments herein. In particular, the process 3400 illustrated in Figure 34 is directed to automatic, responsive image calibration in contrast to the pre-calibration process 3300.

In some embodiments, at 3402, an image, sequence of images, or video may be loaded, for example, from a local processing and data module 70 or remote data depository 74. In some embodiments, at 3404, hardware, such as, for example, camera assembly 82, MEMS, linear actuators, a laser projector, and/or electrical circuits may be started. In some embodiments, at 3206, the pupil position of user or viewer 60 may be determined. By way of example, camera assembly 82 may be configured to obtain images of a user or viewer's eye and transmit the images to one or more processing modules 70 or 72, which may determine a pupil position based on the images. In some embodiments, the bin position to pupil radius may be determined. In some embodiments, at 3408, once the pupil position has been determined, a pupil steering mechanism may be actuated to move the exit pupil to the determined pupil position of user or viewer 60. In some embodiments, one or more gratings of a beam steering unit may be mechanically translated in two dimensions to move the pupil position, as described in detail above. In some embodiments, at 3410, an image ROI may be selected as a function of the pupil position. Once an image(s) ROI is selected image distortion and color correction may be applied to the image(s) ROI as a function of the pupil position at 3412 and 3414, respectively. Finally, at 3416, the image(s) may be display to user or viewer 60 at the exit pupil. The process is ended at 3418.

The above described process may require image distortion, color correction, and mechanical translation of beam steering components to be determined as a function of pupil position. In contrast to process 3300, process 3400 may be easily adapted to accept input of various kinds of images or videos. However, since image calibration is completed in response to tracked pupil movement rather than during a pre-processing step, display process 3400 may require relatively fast movement tracking, pupil steering, and image correction to provide a correct image(s) to user or view 60. On the other hand, large amounts of storage are not required since a plurality of pre-calibrated ROI images do not generally need to be stored using process 3400.

### Mechanical and Optical Systems Integration

As described above, display systems described herein may comprise a diffractive reflector comprising a beam steering unit comprising one or more of the pupil steering mechanisms. In some embodiments, the pupil steering mechanisms may comprise one or more mechanically actuated diffractive gratings. In some embodiments, the mechanically actuated diffractive gratings comprise VPHs.

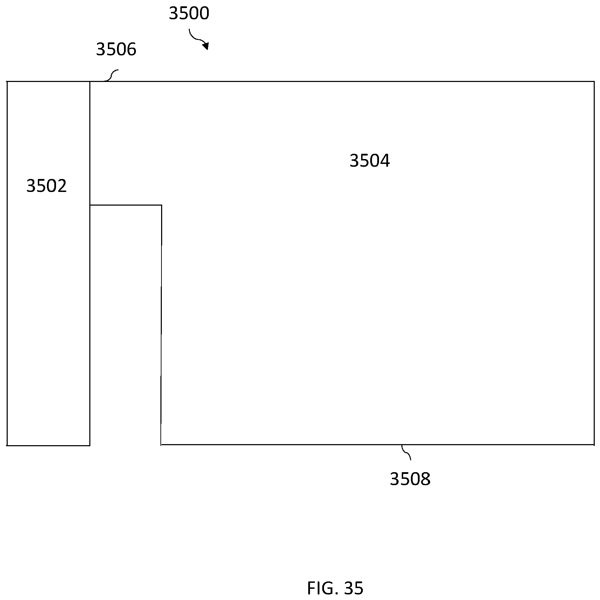

Figure 35 illustrates an example mechanically actuated diffractive reflector assembly according to some embodiments herein. Diffractive reflector assembly 3500 may comprise an actuator assembly 3502 coupled to a diffractive reflector 3504 (e.g., an optical combiner). The diffractive reflector 3504 may be comprise any of the optical architectures and/or diffractive reflector architectures described herein. In some embodiments, the actuator assembly may comprise one or more linear actuators for actuating a pupil steering mechanism within diffractive reflector 3504. In some embodiments, the one or more linear actuators may comprise electric linear actuators. It will be appreciated that the electric linear actuators may converts the rotational motion of an AC or DC motor into linear motion. The linear motion may lift, drop, slide, adjust, tilt, push, or pull gratings within the diffractive reflector 3504 to achieve a desired beam steering position. For example, the linear motion may cause translation, rotation, and/or tilting of diffractive gratings within diffractive reflector 3504, such that light from a projector is steered to an exit pupil at a desired position. Linear actuator assembly 3502 may be controlled via one or more controllers. For example, linear actuator assembly may be controlled with the processing modules 70 and/or 72 of display device 62.

In some embodiments, diffractive reflector 3604 may comprise an attachment portion 3506, which couples to the actuator assembly 3502, and a display portion 3508, wherein the majority of the optical architecture is housed and where the optical functions of the diffractive reflector 3504 are generally performed.

In some embodiments, the display portion 3508 may comprise about a 50 mm length and a 33 mm height, wherein the length comprises the horizontal dimension or X direction of the display portion 3508 and wherein the height comprises the vertical dimension or Y direction of the display portion 3508 in Figure 35.

In some embodiments, the length of the display portion 3508 may be about 10 mm, about 11 mm, about 12 mm, about 13 mm, about 14 mm, about 15 mm, about 16 mm, about 17 mm, about 18 mm, about 19 mm, about 20 mm, about 21 mm, about 22 mm, about 23 mm, about 24 mm, about 25 mm, about 26 mm, about 27 mm, about 28 mm, about 29 mm, about 30 mm, about 31 mm, about 32 mm, about 33 mm, about 34 mm, about 35 mm, about 36 mm, about 37 mm, about 38 mm, about 39 mm, about 40 mm, about 41 mm, about 42 mm, about 43 mm, about 44 mm, about 45 mm, about 46 mm, about 47 mm, about 48 mm, about 49 mm, about 50 mm, about 51 mm, about 52 mm, about 53 mm, about 54 mm, about 55 mm, about 56 mm, about 57 mm, about 58 mm, about 59 mm, about 60 mm, about 61 mm, about 62 mm, about 63 mm, about 64 mm, about 65 mm, about 66 mm, about 67 mm, about 68 mm, about 69 mm, about 70 mm, about 71 mm, about 72 mm, about 73 mm, about 74 mm, about 75 mm, about 76 mm, about 77 mm, about 78 mm, about 79 mm, about 80 mm, about 81 mm, about 82 mm, about 83 mm, about 84 mm, about 85 mm, about 86 mm, about 87 mm, about 88 mm, about 89 mm, about 90 mm, about 91 mm, about 92 mm, about 93 mm, about 94 mm, about 95 mm, about 96 mm, about 97 mm, about 98 mm, about 99 mm, about 100 mm, or a value between any of the aforementioned values.

In some embodiments, the height of the display portion 3508 may be about 10 mm, about 11 mm, about 12 mm, about 13 mm, about 14 mm, about 15 mm, about 16 mm, about 17 mm, about 18 mm, about 19 mm, about 20 mm, about 21 mm, about 22 mm, about 23 mm, about 24 mm, about 25 mm, about 26 mm, about 27 mm, about 28 mm, about 29 mm, about 30 mm, about 31 mm, about 32 mm, about 33 mm, about 34 mm, about 35 mm, about 36 mm, about 37 mm, about 38 mm, about 39 mm, about 40 mm, about 41 mm, about 42 mm, about 43 mm, about 44 mm, about 45 mm, about 46 mm, about 47 mm, about 48 mm, about 49 mm, about 50 mm, about 51 mm, about 52 mm, about 53 mm, about 54 mm, about 55 mm, about 56 mm, about 57 mm, about 58 mm, about 59 mm, about 60 mm, about 61 mm, about 62 mm, about 63 mm, about 64 mm, about 65 mm, about 66 mm, about 67 mm, about 68 mm, about 69 mm, about 70 mm, about 71 mm, about 72 mm, about 73 mm, about 74 mm, about 75 mm, about 76 mm, about 77 mm, about 78 mm, about 79 mm, about 80 mm, about 81 mm, about 82 mm, about 83 mm, about 84 mm, about 85 mm, about 86 mm, about 87 mm, about 88 mm, about 89 mm, about 90 mm, about 91 mm, about 92 mm, about 93 mm, about 94 mm, about 95 mm, about 96 mm, about 97 mm, about 98 mm, about 99 mm, about 100 mm, or a value between any of the aforementioned values.

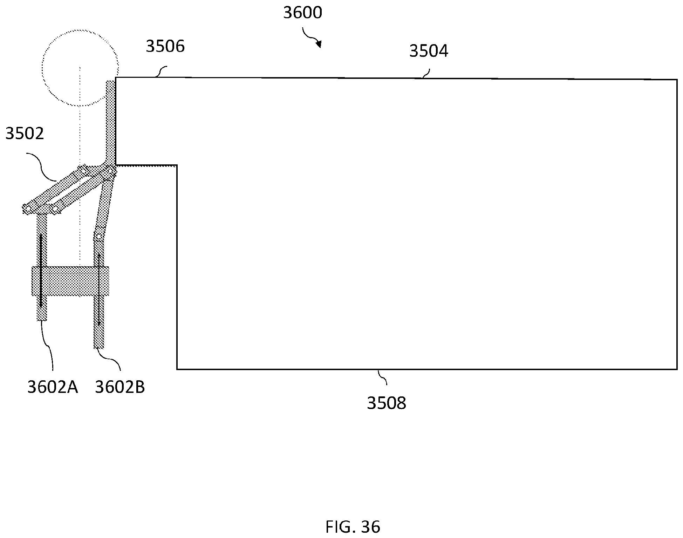

Figure 36 illustrates another example actuated diffractive reflector assembly according to some embodiments herein. Diffractive reflector assembly 3600 comprises diffractive reflector 3504 comprising display portion 3508 and connector portion 3506. The diffractive reflector 3504 may comprise any of the optical architectures and/or diffractive reflector architectures described herein. Diffractive reflector assembly 3600 may also comprise actuator assembly 3502 comprising linear actuators 3602A and 3602B for actuating beam steering mechanisms within diffractive reflector 3504. In some embodiments, actuator assembly 3502 may enable a 360 degree range of motion of the beam steering mechanism in the horizontal and vertical axes of Figure 36. In some embodiments, actuator assembly 3502 may also enable rotation and/or tilting of beam steering mechanisms of diffractive reflector 3504.

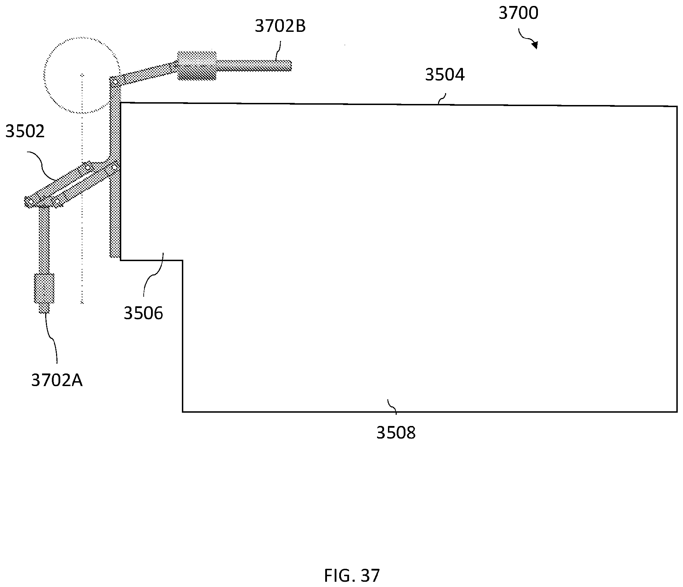

Figure 37 illustrates another example actuated diffractive reflector according to some embodiments herein. Diffractive reflector assembly 3700 comprises diffractive reflector 3504 comprising display portion 3508 and connector portion 3506. Diffractive reflector assembly 3700 may also comprise actuator assembly 3502 comprising linear actuators 3702A and 3702B for actuating beam steering mechanisms within diffractive reflector 3504. In some embodiments, actuator assembly 3502 may enable a 360 degree range of motion of the beam steering mechanism in the horizontal and vertical axes of Figure 37. In some embodiments, actuator assembly 3502 may also enable rotation and/or tilting of beam steering mechanisms of diffractive reflector 3504.

The illustrated embodiments of Figures 35-37 are exemplary in nature. It will be understood by the skilled artisan that any actuation mechanism may be used to perform mechanical actuation of beam steering mechanisms within the displays comprising diffractive reflectors, which may form a part of an optical combiner.

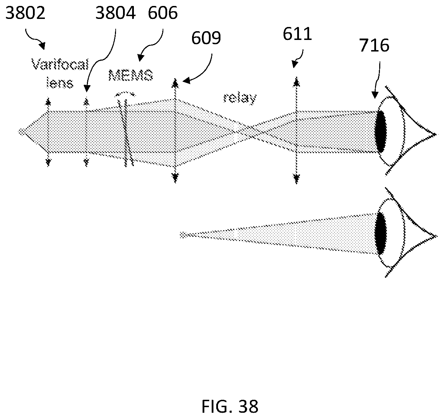

As described above, the optical architectures herein may be combined with upstream varifocal to provide accommodation-vergence matching. Without utilization of a varifocal lens, the virtual location of a displayed image may be at optical infinity and the optical architecture may only be configured to display an image on a single depth plane. However, an integrated upstream varifocal may enable movement of the virtual image source to display images at multiple focal planes. Figure 38 illustrates a diagram of an example functionality of an upstream varifocal according to some embodiments herein. In some embodiments, a varifocal lens 3802 may be located within a projection system, such as an image light projector 602. All of the VRD systems and architectures described herein are compatible with varifocal elements placed in the projection system. For example, as illustrated in Figure 38, placing a varifocal element 3802 adjacent to a laser collimator 3804 allows for the display to be focused at various distances to provide appropriate accommodation cues for an eye 716 of a user and avoid vergence-accommodation conflict. This configuration is further compatible with MEMS 606 and additional optical elements 609, 611 as described herein. It will be appreciated to those skilled in the art that the placement of the varifocal within the optical architecture may be varied and is not limited to the illustrated embodiment. For example, the varifocal may be provided upstream or downstream of MEMS 606.

### Other Embodiments

In the foregoing specification, the invention has been described with reference to specific embodiments thereof. It will, however, be evident that various modifications and changes may be made. The specification and drawings are, accordingly, to be regarded in an illustrative rather than restrictive sense.

Indeed, it will be appreciated that the systems and methods of the disclosure each have several innovative aspects, no single one of which is solely responsible or required for the desirable attributes disclosed herein. The various features and processes described above may be used independently of one another, or may be combined in various ways.

Certain features that are described in this specification in the context of separate embodiments also may be implemented in combination in a single embodiment. Conversely, various features that are described in the context of a single embodiment also may be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination. No single feature or group of features is necessary or indispensable to each and every embodiment.

It will be appreciated that conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without author input or prompting, whether these features, elements and/or steps are included or are to be performed in any particular embodiment. The terms "comprising," "including," "having," and the like are synonymous and are used inclusively, in an open- ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. In addition, the articles "a," "an," and "the" as used in this application and the appended claims are to be construed to mean "one or more" or "at least one" unless specified otherwise. Similarly, while operations may be depicted in the drawings in a particular order, it is to be recognized that such operations need not be performed in the particular order shown or in sequential order, or that all illustrated operations be performed, to achieve desirable results. Further, the drawings may schematically depict one more example processes in the form of a flowchart. However, other operations that are not depicted may be incorporated in the example methods and processes that are schematically illustrated. For example, one or more additional operations may be performed before, after, simultaneously, or between any of the illustrated operations. Additionally, the operations may be rearranged or reordered in other embodiments. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

## Claims

1. A head-mounted display system (80) comprising:
a frame (64);
an image light projector (602) supported by the frame;
a diffractive reflector (608) supported by the frame and disposed forward of the image light projector, the diffractive reflector configured to receive image light projected by the image light projector and to reflect the image light into an eye of a user (60) upon retention of the display system on the user, **characterized in that** the diffractive reflector comprises:
a plurality of diffractive layers; and
an actuator supported by the frame and configured to change relative orientations of the diffractive layers, wherein different relative orientations of the diffractive layers are configured to reflect light to different associated eye positions.

2. The head-mounted display system (80) of Claim 1, wherein the actuator is a mechanical actuator configured to change relative physical positions of the diffractive layers.

3. The head-mounted display system (80) of Claim 2, wherein the actuator is configured to rotate one or more of the diffractive layers.

4. The head-mounted display system (80) of Claim 3, wherein the diffractive reflector comprises a Risley prism-based stack of diffractive layers.

5. The head-mounted display system (80) of Claim 1, wherein the actuator is configured to laterally shift one or more of the diffractive layers.

6. The head-mounted display system (80) of Claim 5, wherein either the diffractive layers comprise volume phase holograms, or the diffractive layers comprise reflective geometric phase lense.

7. The head-mounted display system (80) of Claim 1, further comprising an eye tracking system for determining a position of the pupil of the eye of the user (60), wherein the actuator is configured to effectuate different orientations corresponding to different pupil locations based upon the determined position of the pupil.

8. The head-mounted display system (80) of Claim 1, wherein the image light projector (602) has a fixed orientation relative to the diffractive reflector.

## Patentansprüche

1. Am Kopf angebrachtes Anzeigesystem (80), das umfasst:
einen Rahmen (64);
einen vom Rahmen getragenen Bildlichtprojektor (602);
einen vom Rahmen getragenen und vor dem Bildlichtprojektor angeordneten Beugungsreflektor (608), wobei der Beugungsreflektor so konfiguriert ist, dass er vom Bildlichtprojektor projiziertes Bildlicht empfängt und das Bildlicht in ein Auge eines Benutzers (60) reflektiert, wenn das Anzeigesystem am Benutzer befestigt ist, **dadurch gekennzeichnet, dass** der Beugungsreflektor umfasst:
eine Vielzahl von Beugungsschichten; und
einen Aktuator, der von dem Rahmen angebracht wird und so konfiguriert ist, dass er die relativen Ausrichtungen der Beugungsschichten verändert, wobei unterschiedliche relative Ausrichtungen der Beugungsschichten so konfiguriert sind, dass sie Licht zu unterschiedlichen zugehörigen Augenpositionen reflektieren.

2. Am Kopf angebrachtes Anzeigesystem (80) nach Anspruch 1, wobei der Aktuator ein mechanischer Aktuator ist, der so konfiguriert ist, dass er die relativen physikalischen Positionen der Beugungsschichten verändert.

3. Am Kopf angebrachtes Anzeigesystem (80) nach Anspruch 2, wobei der Aktuator dafür konfiguriert ist, eine oder mehrere der Beugungsschichten zu drehen.

4. Am Kopf angebrachtes Anzeigesystem (80) nach Anspruch 3, wobei der Beugungsreflektor einen auf einem Risley-Prisma basierenden Stapel aus Beugungsschichten umfasst.

5. Am Kopf angebrachtes Anzeigesystem (80) nach Anspruch 1, wobei der Aktuator dafür konfiguriert ist, eine oder mehrere der Beugungsschichten seitlich zu verschieben.

6. Am Kopf angebrachtes Anzeigesystem (80) nach Anspruch 5, wobei entweder die Beugungsschichten Volumenphasenhologramme umfassen oder die Beugungsschichten reflektierende geometrische Phasenlinsen umfassen.

7. Am Kopf angebrachtes Anzeigesystem (80) nach Anspruch 1, das ferner ein Augenverfolgungssystem zur Bestimmung einer Position der Pupille des Auges des Benutzers (60) umfasst, wobei der Aktuator so konfiguriert ist, dass er basierend auf der bestimmten Position der Pupille unterschiedliche Ausrichtungen entsprechend unterschiedlichen Pupillenpositionen bewirkt.

8. Am Kopf angebrachtes Anzeigesystem (80) nach Anspruch 1, wobei der Bildlichtprojektor (602) eine feste Ausrichtung relativ zum Beugungsreflektor aufweist.

## Revendications

1. Système formant visiocasque (80) comprenant :
une monture (64),
un projecteur de lumière d'image (602) supporté par la monture,
un réflecteur diffractif (608) supporté par la monture et disposé en avant du projecteur de lumière d'image, le réflecteur diffractif étant conçu pour recevoir une lumière d'image projetée par le projecteur de lumière d'image et pour réfléchir la lumière d'image vers un œil d'un utilisateur (60) lorsque le système d'affichage est porté par l'utilisateur ; **caractérisé en ce que** le réflecteur diffractif comprend :
une pluralité de couches diffractives, et
un actionneur supporté par la monture et conçu pour modifier des orientations relatives des couches diffractives, des orientations relatives différentes des couches diffractives permettant de réfléchir la lumière vers différentes positions oculaires associées.

2. Système formant visiocasque (80) selon la revendication 1, dans lequel l'actionneur est un actionneur mécanique conçu pour modifier des positions physiques relatives des couches diffractives.

3. Système formant visiocasque (80) selon la revendication 2, dans lequel l'actionneur est conçu pour faire tourner une ou plusieurs des couches diffractives.

4. Système formant visiocasque (80) selon la revendication 3, dans lequel le réflecteur diffractif comprend un empilement de couches diffractives reposant sur le prisme de Risley.

5. Système formant visiocasque (80) selon la revendication 1, dans lequel l'actionneur est conçu pour déplacer latéralement une ou plusieurs des couches diffractives.

6. Système formant visiocasque (80) selon la revendication 5, dans lequel soit les couches diffractives comprennent des hologrammes de phase volumique, soit les couches diffractives comprennent des lentilles de phase géométrique réfléchissantes.

7. Système formant visiocasque (80) selon la revendication 1, comprenant en outre un système de suivi oculaire destiné à déterminer la position de la pupille de l'œil de l'utilisateur (60), l'actionneur étant conçu pour mettre en œuvre différentes orientations correspondant à différents emplacements de la pupille en fonction de la position déterminée de celle-ci.

8. Système formant visiocasque (80) selon la revendication 1, dans lequel le projecteur de lumière d'image (602) présente une orientation fixe par rapport au réflecteur diffractif.
